# EUROPEAN PATENT SPECIFICATION

(11) **EP 1 170 927 B1**
(45) Date of publication and mention of the grant of the patent: **28.06.2006**
(21) Application number: 01303423.6
(22) Date of filing: 11.04.2001
(51) Int. Cl.: H04L 29/06

(54) **Security communication method, security communication system, and apparatus thereof**
Gesichtertes Kommunikationsverfahren, gesichtertes Kommunikationssystem und Gerät
Méthode de communication sécurisée

(30) Priority: 12.04.2000 JP 2000110651
(43) Date of publication of application: 09.01.2002
(60) Divisional application: 03026370.1
(73) Proprietor: MATSUSHITA ELECTRIC INDUSTRIAL CO., LTD., Kadoma-shi, Osaka-fu 571-8501 (JP)
(72) Inventor: Yamaguchi, Masashi, Osaka-shi, Osaka-fu (JP); Tanaka, Yutaka, Osaka-shi, Osaka-fu (JP); Yamauchi, Hiroki, Kusatsu-shi, Shiga-ken 525-0027 (JP); Ota, Yusaku, Neyagawa-shi, Osaka-fu (JP)
(74) Representative: Dempster, Benjamin John Naftel

(56) References cited:
- WO-A-99/67930
- US-A- 6 005 939
- MOLVA R: "Internet security architecture" COMPUTER NETWORKS, ELSEVIER SCIENCE PUBLISHERS B.V., AMSTERDAM, NL, vol. 31, no. 8, 23 April 1999 (1999-04-23), pages 787-804, XP004304518 ISSN: 1389-1286
- SCHOBLICK R: "SECURITY ASSOCIATION & KEY MANAGEMENT" FUNKSCHAU, FRANZIS-VERLAG K.G. MUNCHEN, DE, vol. 73, no. 6, 3 March 2000 (2000-03-03), pages 53-54, XP000954892 ISSN: 0016-2841
- MAUGHAN ET AL: "Network Working roup RFC 2408 Standards Track" IETF REQUEST FOR COMMENTS, XX, XX, November 1998 (1998-11), pages 1-86, XP002165436

## Description

This invention relates to a security communication method, and more specifically to a security communication method, a security communication system and apparatuses thereof, which permit to change a security type if necessary.

A personal computer and the Internet technology are spreading worldwide suddenly, so that it could be easy to provide and collect information on the cheap by homepages published on the Internet. The popularization of those technologies has not remained there, but it is general that the exchange of e-mail via Internet or Intranet between companies comes into common use along with the e-commerce (Electronic Commerce) and the Electronic Funds Transfer System (EFTS) utilizing such services. In case of utilizing those services, the most important matter is that the security for the communication including particular important information must be assured like that of the dedicated line.

Various forms of Internet security architecture are discussed in Molva R : "Internet security archiecture" Computer Networks, Elsevier Science Publishers B.V., Amsterdam, NL, vol. 31, no. 8, 23 April 1999, pages 787-804. This discusses the current cryptographic security measures available for the Internet infrastructure as an alternative to physical segregation.

Other documents relating to Internet security are Shoblick R : "Security Association & Key Management" Funkschau, Franzis-Verlag K.G. Munchen, DE vol. 73 no. 6, 3 March 2000 pages 53-54 and Maughan et al : "Network Working roup RFC 2408 Standards Track" IETF Request for comments, XX, XX, November 1998, pages 1-86.

As the technology for assuring the above security, for example, the security communication technology like the Virtual Private Network (VPN) has begun to attract notice, the VPN is a technology considering the Wide Area Network to be a Virtual Private Network. There is a tunneling protocol that is a connecting procedure of the security communication for carrying out the VPN, that is to say, L2F (Layer 2 Forwarding), PPTP (Point-to-Point Tunneling Protocol), L2TP (Layer 2 Tunneling Protocol), ATMP (Ascend Tunnel Management Protocol), BayDVS (Bay Stream Dial VPN Service), and IPSEC (Internet Protocol Security Protocol) can be proposed. By using those protocols for the security communication, it is possible to assure the security of the communication and etc. on the Wide Area Network wherein the third party can tap the communication.

Among those technologies, the IPSEC is a security protocol performing the authentication and the encryption on the network layer (the third layer of the Open System Interconnection reference model), and is standardized by the Internet Engineering Task Force (IETF) (RFC 2401 to 2412 and 2451). Connecting with the Internet via a computer or a router of a network interface apparatus having the IPSEC function can configure the VPN. In other words, a user can utilize the Internet safely without considering a type of network. In addition, when a user starts to perform the communication utilizing the IPSEC, it is necessary to confirm in advance the matching regarding the type of authentication algorithm or encryption algorithm, the type of encryption key, and etc. between computers or network interface apparatuses having the IPSEC function on both a sending end and a receiving end. The intercommunication for the matching of the authentication algorithm or the encryption algorithm is called the connection for the security communication. In IPSEC, the Security Association (SA) can carry out the connection. The SA, which is a basic framework providing a function of both authentication and the exchanging of secured messages, establishes the context of the communication and defines the some aspects of the security for the communication.

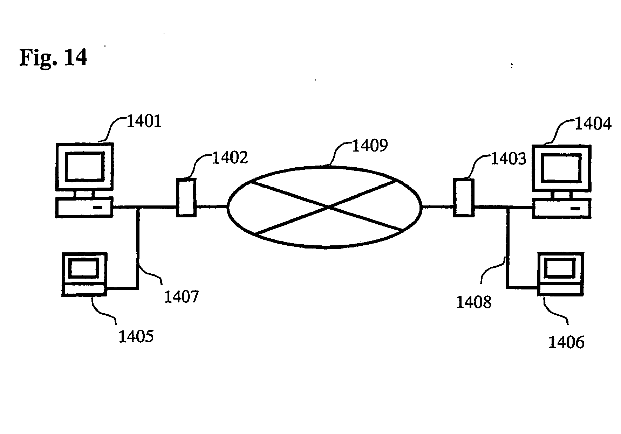

The method employing the conventional IPSEC as the security communication is explained as follows according to FIGS. 14, 15, 17 and 18. A communication terminal in the explanation may include a network interface apparatus and a computer.

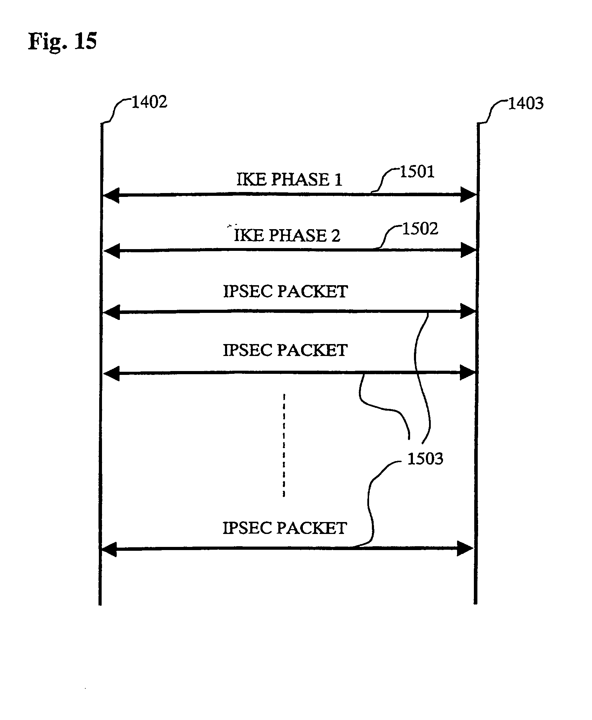

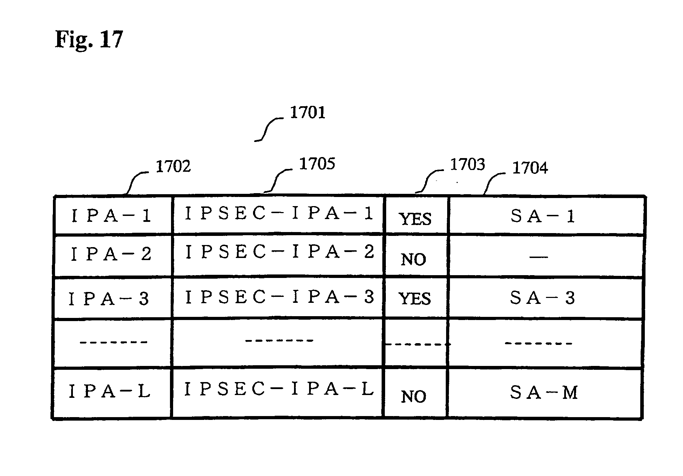

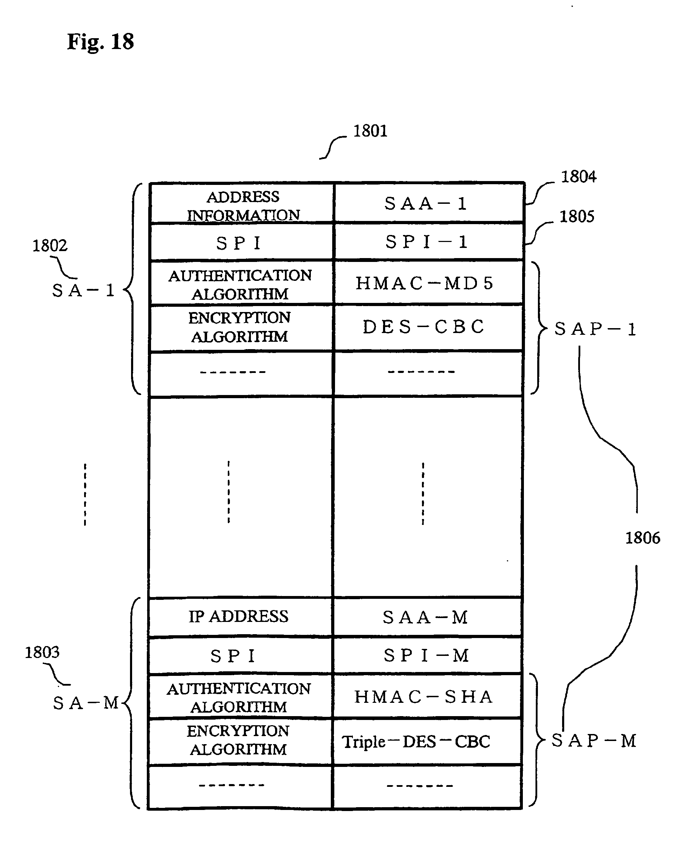

Fig. 14 shows a block diagram of a conventional network system making up the VPN network by using routers having the IPSEC function as the security communication. Fig. 15 is a diagram showing the connecting procedures for the security communication between network interface apparatuses having the IPSEC function. Fig. 17 shows an example of Security Policy Database (SPD) in the prior art determining the processing policy of the IPSEC. Fig. 18 shows an example of Security Association Database (SAD) in the prior art. The SPD is a database making up the security policy. The security policy means the access regulations to a system in which the security is assured, which generally includes security requirements, risks of the security, and security measuring means. In case of a system assuring the security between the communication terminals, the SPD is provided with information for distinguishing the communication terminal of the destination employing the security and for determining whether the security should be applied to the communication or not. In IPSEC, the security policy is described on the SPD, while the contents of the SPD, such as IP address of communication terminal on a destination, whether the IPSEC processing was performed or not, and the address information indicating a memory position of a SA where the content of the authentication algorithm or encryption algorithm are described, are provided with.

A computer 1401 is connected with other computer 1405 and a network interface apparatus 1402 via Local Area Network (LAN) 1407, while being connected with an external Internet 1409 or WAN such as Intranet passing through the network interface apparatus 1402. The Internet 1409 is connected with LAN 1408 connected with computers 1404 and 1406 via other network interface apparatus 1403. The network interface apparatuses 1402 and 1403 are a firewall or an apparatus dedicated for VPN, such as a router, a gateway, or a proxy server. The computer 1401 in this system may be a terminal including a communication function like a personal computer, a workstation, a server, a notebook-sized personal computer, an IP phone, an IP TV-phone, or an IP mobile phone.

It is presupposed that the network interface apparatuses 1402 and 1403 include the IPSEC function and the communication based on IPSEC is performed between them. In addition, if the computers 1401 and 1404 include the IPSEC function, it is also possible to carry out the communication based on IPSEC between them. Moreover, it is also possible to carry out the communication base on IPSEC between the computer 1401 having the IPSEC function and the network interface apparatus 1403 having the IPSEC function.

When the computer 1401 sends data to the computer 1404 via Internet 1409, it is necessary to perform in advance the connecting between the network interface apparatuses 1402 and 1403 for the security communication. The connecting for the security communication is explained as follows.

Before starting the IPSEC communication, Internet Key Exchange (IKE) is employed as a protocol for exchanging the encryption key of IPSEC. The communication using IKE can be explained dividing an IKE phase 1 and an IKE phase 2, which is performed between the network interface apparatuses 1402 and 1403. It may be arranged that the secret key be exchanged in manual without using the automatic key exchanging of IKE.

The IKE phase 1 (1501) can exchange with each other the information for establishing the available SA for the safe communication of IKE itself. The SA means here a series of groups of definition information including the authentication algorithm, the authentication parameter, the encryption algorithm, the encryption parameter and so on.

Next, the IKE phase 2 exchanges the information about the SA for IPSEC communication according to the SA established by the IKE phase 1. An example of the SA for the IPSEC communication is shown in Fig. 18. In Fig. 18, SAD 1801 shows a plurality of SA and includes SA-1 (1802) to SA-M (1803). Each SA includes address information (1804), SPI (1805) as index information (Security Parameter Index), and SAP (1806) as a security parameter. The address information (1804) includes IP address of destination, port number of destination, IP address of sending end, port number of sending end, protocol number, and so on. The SPI 1805 adopts the pseudo random numbers. The SAP 1806 stores the direct information associated with the level of the security communication such as the authentication algorithm, the encryption algorithm and the encryption key. For instance, the SAP-1 includes HMAC-MD5 as the authentication algorithm while DES-CBC as the encryption algorithm.

Exchanging information about the SA for the IPSEC communication is performed by the IKE phase 2 (1502), which is explained here in the concrete. The network interface apparatus 1402 sends to the network interface apparatus 1403 the proposal component of the SA applied to the IPSEC communication, in response to this the network interface apparatus 1403 sends back one acceptable SA among the proposals. At this time, the proposal component of the SA is made up by using the authentication algorithm or the encryption algorithm previously stored in data storage 2103 of the network interface apparatus 1402. The data storage 2103 will be explained later. The type of the authentication algorithm or the encryption algorithm included in the network interface apparatus 1402 depends on the kind of network interface apparatus. Besides, it is possible to predetermine the SA that the network interface apparatus 1402 is to propose.

According to the reply processing of SA described above, the SA to be applied to the IPSEC communication is established. The information of the established SA applied to the IPSEC communication is stored in SAD 1801 in Fig. 18 and SPD 1701 in Fig. 17. The configuration of SPD 1701 is as follows: IP address of destination 1702; whether the IPSEC processing was performed or not 1703; address pointer 1704 indicating the position of each SA in the SAD 1801; and, IP address 1705 of the communication terminal of destination to which the IPSEC packet is sent in case of sending data to IP address of destination 1702. At this time, the IP address 1705 is IP address of the network interface apparatus 1403 concretely. When the communication terminal on source includes the IPSEC function, the IP address 1702 is the same as the above IP address 1705. Additionally, it is possible to designate the range regarding the IP addresses of destination 1702 and 1705. The range designating means the designation from "192.168.1.1." to 192.168.1.100" by using the IP addresses, thereby the one time of the range designation can instruct to send data to 100 units of communication terminals. Since the unidirectional communication requires one SA, in case of the bi-directional communication independent SA's are registered on the network interface apparatuses 1402 and 1403 respectively.

After establishing the SA applied to the IPSEC communication, the computer 1401 adds IP header to the data to be sent from the computer on sending end 1401 to the computer 1404 and then sends it as IP packet toward the network interface apparatus 1402 via LAN 1407. The network interface apparatus 1402 performs the IPSEC processing, which is described later, and then sends the IP packet as IPSEC packet 1503 toward the network interface apparatus 1403. The network interface apparatus 1403 that has received the IPSEC packet 1503 converts to IP packet by the IPSEC processing, which is sent to the computer 1404 via LAN 1408. In other words, on the communication between the network interface apparatuses 1402 and 1403 connected each other via Internet 1409, the IPSEC can assure the security of the data sent from the computer 1401 on the sending end to the computer 1404.

Referring to Figs. 14, 16, 19 and 20, here is explained in detail about the IPSEC processing performed by the network interface apparatuses 1402 and 1403. Fig. 16 is a detail view of the Authentication Header (AH) format and the header format of Encapsulation Security Payload (ESP). Fig. 19 is a flowchart of the IPSEC processing performed by the network interface apparatus on the sending end, while Fig.20 is a flowchart of the IPSEC processing performed by the network interface apparatus on the receiving end.

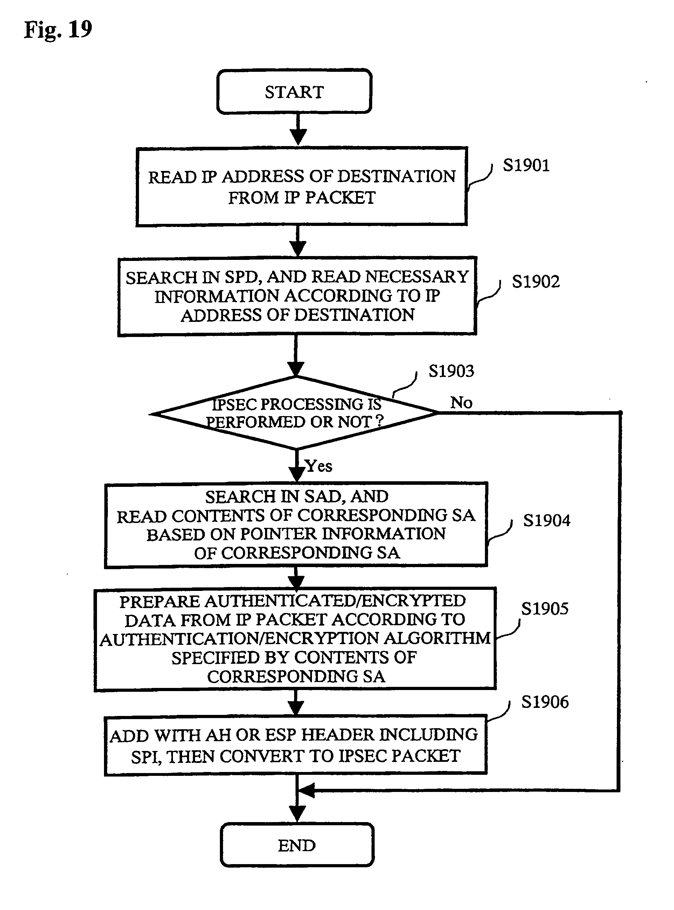

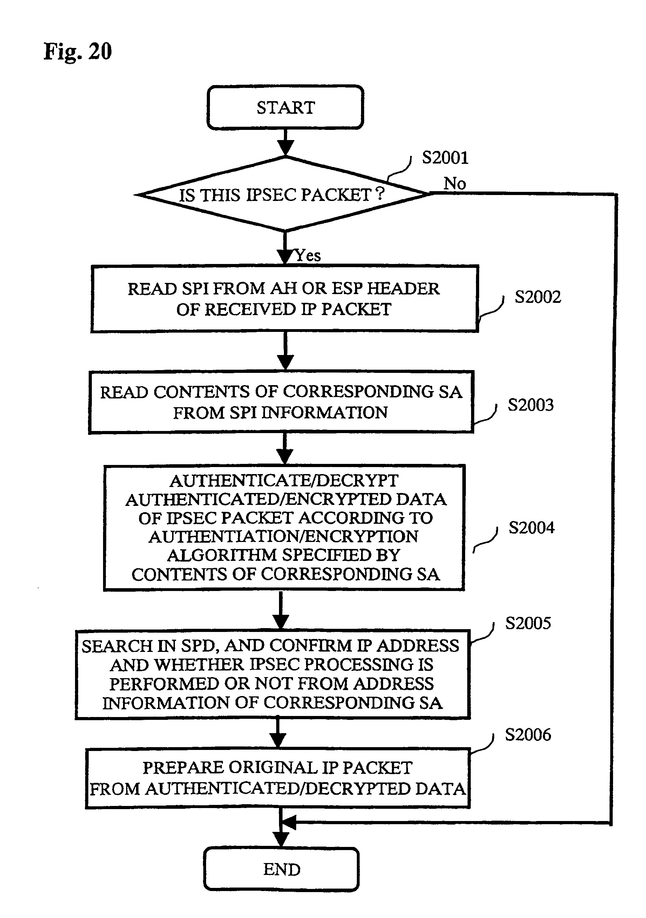

The SPD and SAD, which are explained later, are stored in respective data storage 2103 of the network interface apparatus. "S" shown in Figs. 19 and 20 means a Step of the processing.

When receiving the IP packet sent from the computer 1401 on the sending end, the network interface apparatus 1402 reads the IP address of destination of the IP packet (Fig. 19, S1901). In addition, according to the IP address of destination of the IP packet, the network interface apparatus 1402 finds out the information corresponding to the received IP packet from the field of the IP address of destination of the SPD 1701 stored in the network interface apparatus 1402. The information includes the IP address of destination 1705, whether the IPSEC processing was performed or not 1703, and the address pointer 1704 indicating the position of the SA, those regarding the destination to which the corresponding IPSEC packet is sent (Fig. 19, S1902).

In case of the configuration that the IPSEC processing is not performed, that is to say, when "whether the IPSEC processing is performed or not" 1703 is NO, the received IP packet is sent to the network interface apparatus 1403 without the processing (Fig. 19, S1903-NO).

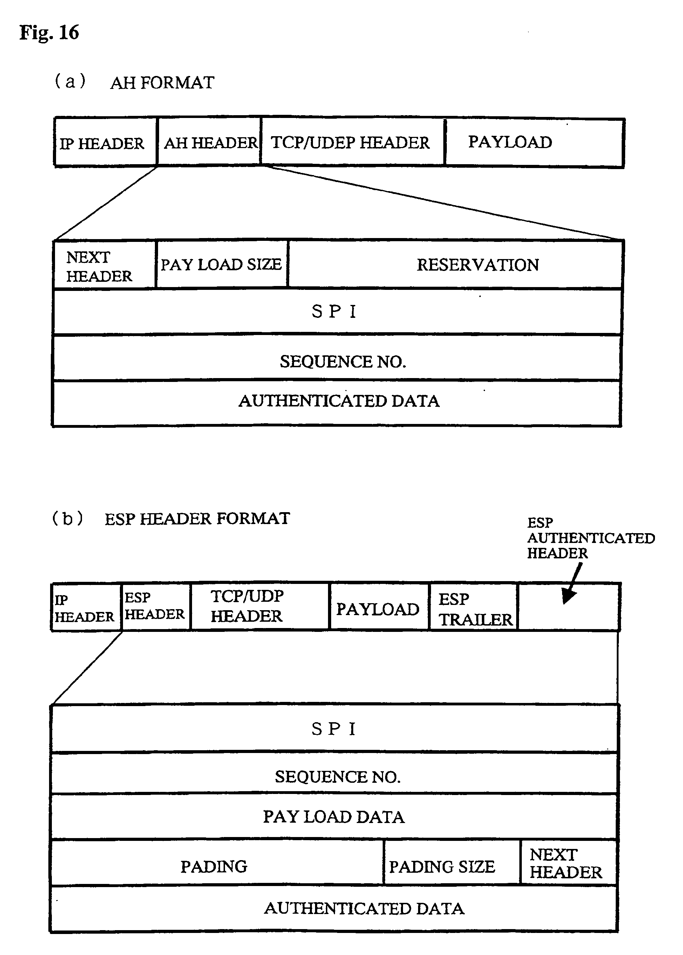

In case of the configuration that the IPSEC processing is performed, that is to say, when "whether the IPSEC processing is performed or not" 1703 is YES, after searching the SAD 1801 according to the address pointer 1704 indicating the position of the SA, the network interface apparatus 1402 read the contents of the corresponding SA (Fig.19, S1903-YES to S1905). The SA has been established by the IKE phase 2 (1502). Next, according to the contents of the SA, the network interface apparatus 1402 prepares, for example, the authenticated/encrypted data based on the IP packet by using HMAC-MD5 as the authentication algorithm and DES-CBC as the encryption algorithm (Fig. 19, S1905). In addition, the network interface apparatus 1402 adds an authentication header AH or an authentication/encryption header ESP to the authenticated/encrypted data, which data changes to be an IP packet (IPSEC packet 1503) processed by the IPSEC processing (Fig. 19, S1906). The AH and the ESP includes the SPI 1805 composing the SA established by the IKE phase 2. Subsequently, the IPSEC packet 1503 is sent to the network interface apparatus 1403 indicated by the IP address 1705 of the SPD 1701 via Internet 1409. By the way, there are two mode of the IPSEC processing, a "tunnel mode" and a "transport mode". The prescribed description refers to the tunnel mode, but when the transport mode is used, the encryption processing is not performed on the IP address of the IP packet. Moreover, it is possible to select the transport mode or the tunnel mode arbitrarily. The detail view of the AH format and the ESP header format are show in Fig. 16(a) and 16(b).

On the next step, the network interface apparatus 1403 determines whether the received IP packet is an IPSEC packet or not (Fig. 20, S2001).

However, when the received IP packet is not an IPSEC packet, the packet is sent to the computer 1404 via LAN 1408 without the processing (Fig. 20, S2001-NO).

On the other hand, when the received IP packet is an IPSEC packet, the following processing is performed (Fig. 20, S2001-YES). That is to say, the network interface apparatus 1403 first searches the AH or the ESP header in the IPSEC packet, and reads the SPI included in the AH or ESP header (Fig. 20, S2002). Next, the network interface apparatus 1403 searches the SAD stored in the network interface apparatus 1403 according to the SPI, and then reads the contents of the SA corresponding to the SPI, the SA is the one established by the IKE phase 2 (Fig. 20, S2003). Thereby, the SA established by the IKE phase 2 can be read out. However, if there is no corresponding SPI on the step of S2002, the massage with that meaning is displayed for a user and then the processing terminates (which is not shown in the drawing).

Additionally, the network interface apparatus 1403 authenticates/ decrypts the authenticated/encrypted data of the IPSEC packet according to the authentication/encryption algorithm specified by the readout SA (Fig. 20, S2004). If necessary, the network interface apparatus 1403 searches the SPD 1701 according to the address information 1804 of the SA, and confirms the IP address on the sending end and whether the IPSEC processing is performed or not, thereby it is possible to prepares the decrypted IP packet (Fig. 20, S2005 to S2006). Subsequently, the network interface apparatus 1403 sends the prepared IP packet to the computer 1404.

As explained above, the authenticated/encrypted data of the authenticated/encrypted IPSEC packet is sent as an IP packet to the computer 1404 via LAN 1408. Therefore, on the communication between the network interface apparatuses 1402 and 1403, it is possible to assure the security by IPSEC regarding the data sent from the computer 1401 on the sending end to the computer 1404.

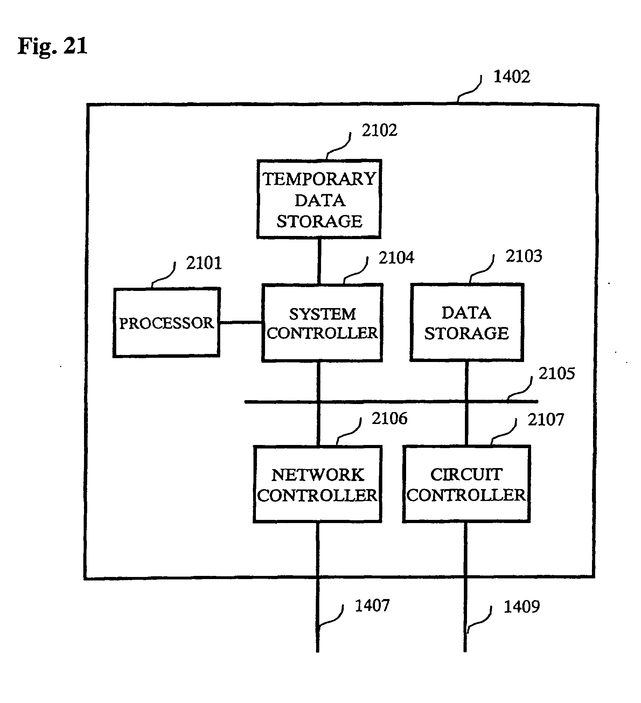

According to Fig. 21, the outline is explained here about the configuration of the network interface apparatus 1402. The network interface apparatus 1403 is the same configuration as of the network interface apparatus 1402.

The network interface apparatuses 1402 and 1403 are generally configured like that shown in Fig. 21. That is to say, a processor 2101, a temporary data storage 2102, a data storage 2103, a system controller 2104, a network controller 2106, and a circuit controller 2107 are connected with each other by a internal bus or a switch 2105 respectively. The network controller 2106 is connected with the LAN 1407, and the circuit controller 2107 is connected with the Internet 1409.

The above-mentioned SPD and SAD are stored in the data storage 2103 configured by a non-volatile memory such as a flash memory, a hard disk, and ROM. The processor 2101 reads the SPD and the SAD from the data storage 2103 passing through the system controller 2104 at the time of power on, and stores them in the temporary data storage 2102 configured by the volatile memory such as DRAM and SRAM, otherwise the processor 2101 reads the SPD and SAD on demand and then stores them in the temporary data storage 2102. The update of the SPD and the SAD is performed only for those stored in the data storage 2103.

Regarding each IP packet (IPSEC packet) received from the LAN 1407 and the Internet 1409 passing through the network controller 2106 and the circuit controller 2107, the processor 2101 performs the IPSEC processing. That is to say, the processor 2101 reads out the AH or ESP information of each IPSEC packet and searches the required SPD and SAD stored in the temporary data storage 2101 according the above-mentioned processing flow. And after performing the authentication/encryption and the authentication/decryption for the IPSEC, the processor 2101 sends it to the address of destination. In addition, the processor 2101 can provide the other functions (the routing function, and so on).

The reason why the SPD and SAD stored in the temporary storage 2102 are searched at the processing of each IP packet is that it is possible to access to the temporary storage speedier than to the data storage 2103, thereby it is possible to advance the speed-up of the IPSEC processing.

As described above, the IP packet processing proceeds referring to the SPD and the SAD stored in the temporary storage 2102. Therefore, for example, when the parameter of the SA is changed, the changed SA parameter is reflected on the communication utilizing the IPSEC only at the time of the power on or the reset of the network interface apparatus 1402. This is the following reasons: it is assumed that the network interface apparatus 1402 such as a router is Always powered on and operated at any time, even when it is necessary to perform the matching of the changed parameter and the SA parameter stored in the temporary storage 2102; and it is also assumed that it is not necessary to change the SPD, the SAD and the other configuration parameter stored in the data storage 2103 because the network communication is established on a specific line such as between a head office and a branch office, for example.

Since the above-mentioned security protocol on the network layer can assure the security of all of communication packets, there is no need to assure the security per application. Therefore, that security protocol has high facilities as the security guard for the LAN connection. However, even though the higher the level of the security (the security performance) gets, the lesser the leakage of the communication occurs, the load of each computer and network interface apparatus increases because the processing of the authentication/encryption for the security requires a great mass of the computational complexity. This causes the delay of the processing. On the other hand, if the level of the security gets down, the possibility of the leakage of the communication increases.

Since the level of the security communication was determined corresponding to a terminal on the receiving end as above in the prior art, there was a need to add the specific level of the security to even the data without requesting the encryption sent from a terminal on the sending end used by a plural users. Such communication increased the unnecessary loads of each computer or each network interface apparatus, thereby the delay of the processing occurred. Conversely, even the data requesting the high level of the security was sent only on the lower level of security than required one, this is a problem.

The router including the conventional IPSEC function needed to predetermine an available SA corresponding to the IP address of the destination of the communication as described above, and the association procedure was very difficult. Therefore it is hard to change the level of the security communication in flexible. And it is also difficult for a user without the special knowledge to arbitrary change the level of the security communication by himself. However, as the exchanging of e-mails via the Internet or the intranet of companies and the e-commerce utilizing these services came into common use more than ever, a simple configuration method is requested so as to be available to not only a big company where there are administrators having a special knowledge about the network but also SOHO (Small Office Home Office) and a home where there is no such person. In addition in the prior art, in case of changing the security level to a suitable one according to the communication like sending a credit number for e-commerce or according to the destination, a user couldn't understand whether the security level at the connection was a suitable one or not. This is the other problem.

In order to resolve the above-mentioned problem, the invention provides an apparatus, system and method according to the appended claims 1, 15 and 17. Preferred embodiments are defined in the dependent claims.

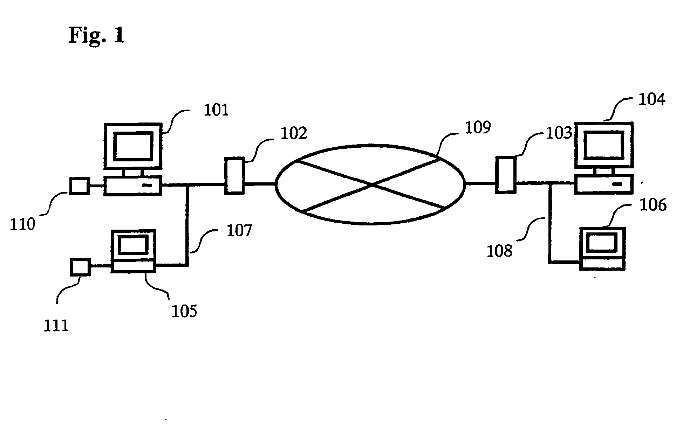

Fig. 1 is a block diagram of a system utilizing the security communication of the invention.

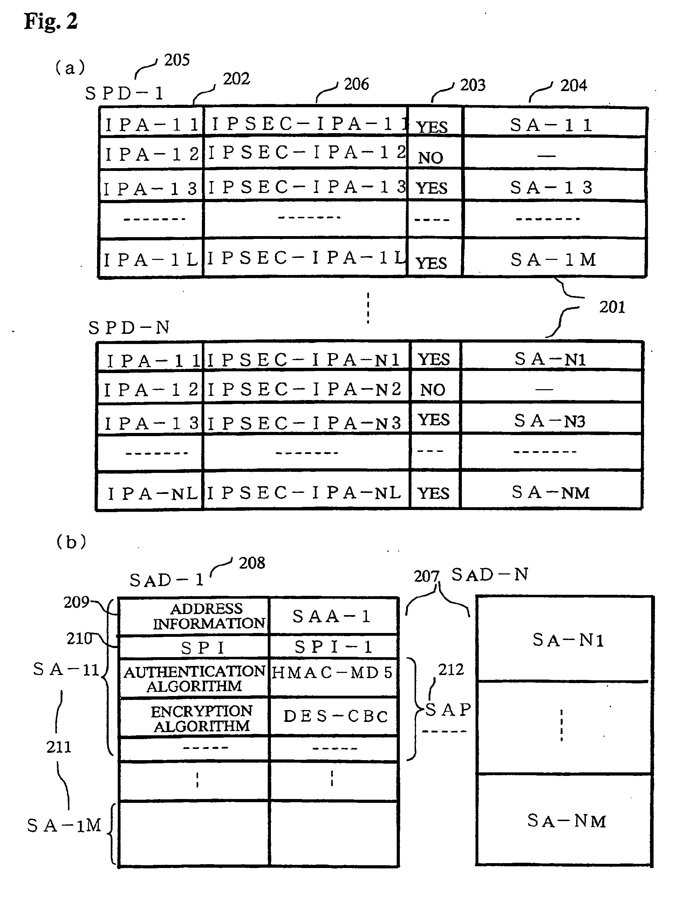

Fig. 2 is an example of SPD and SAD for each user respectively in the first embodiment.

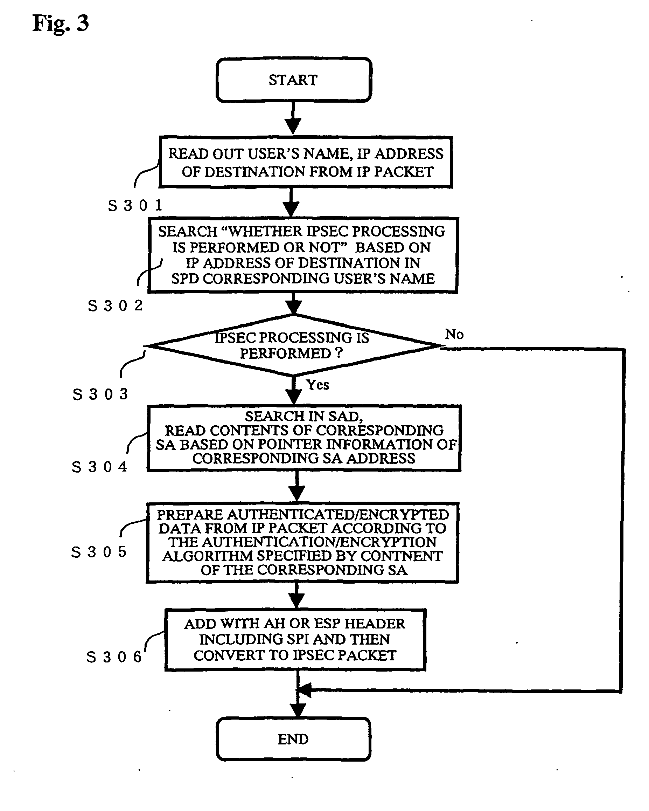

Fig. 3 is a flowchart illustrating the IPSEC processing of the network processor in the first embodiment.

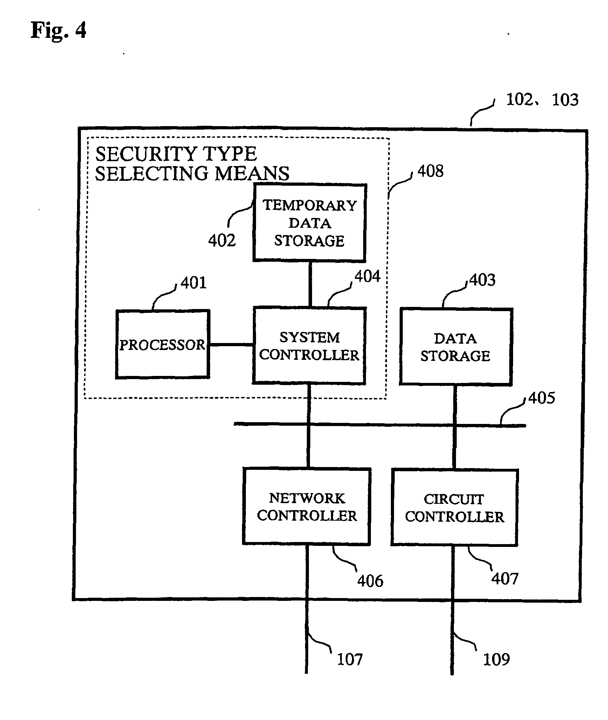

Fig. 4 is a block diagram of the configuration of the network interface apparatus in the first embodiment.

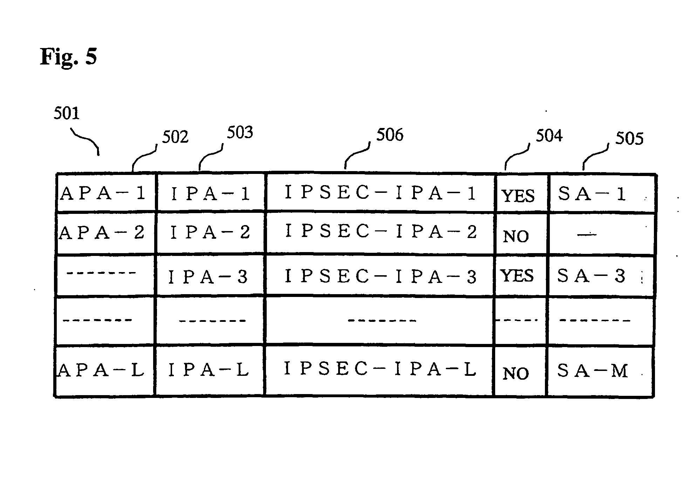

Fig. 5 is an example of SPD using the Internet address in the second embodiment.

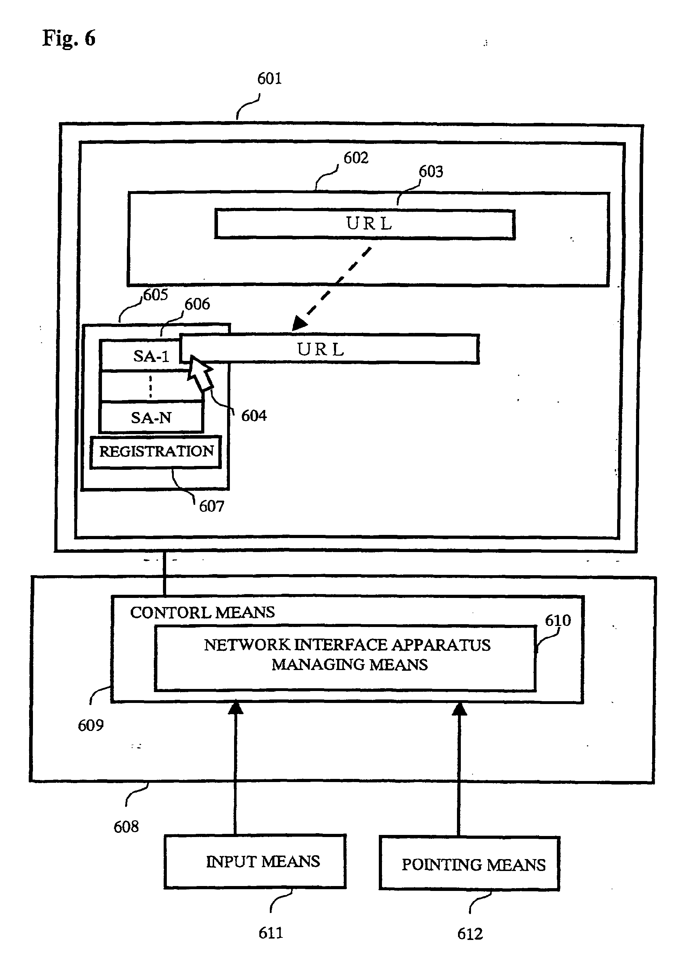

Fig. 6 is a block diagram of a communication terminal such as a computer configured as the network interface apparatus having the IPSEC function in the second embodiment.

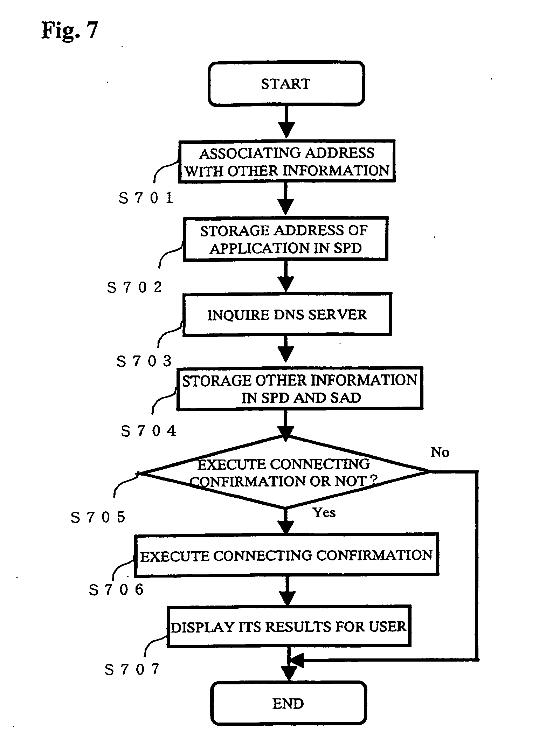

Fig. 7 is a flowchart showing the processing of confirming the configuration of the network interface apparatus in the second embodiment.

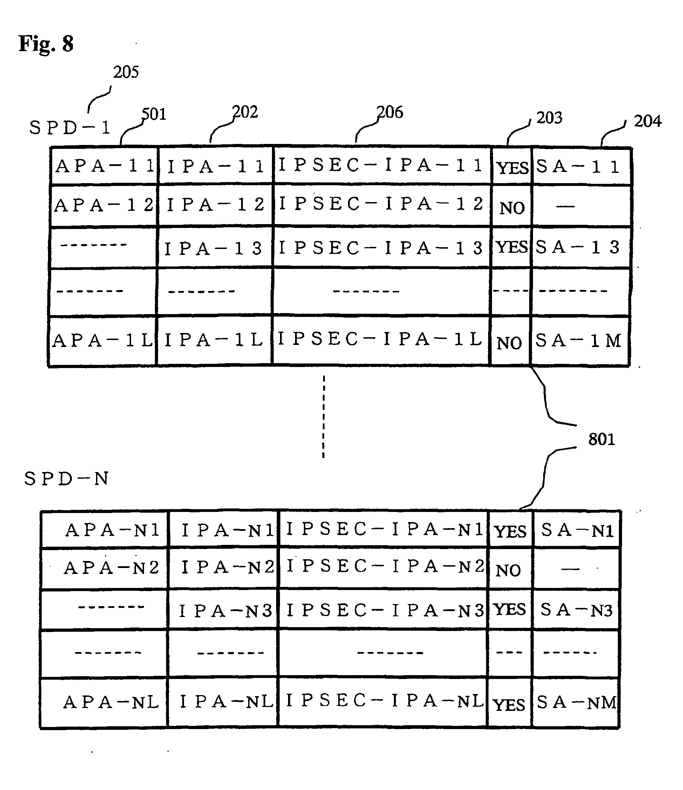

Fig. 8 is an example of SPD using the Internet address for each user in the second embodiment.

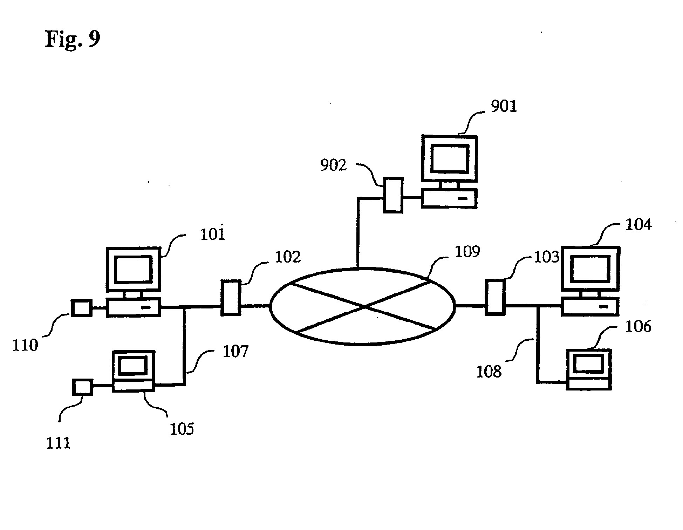

Fig. 9 is a block diagram of a system utilizing the security information apparatus in the third embodiment.

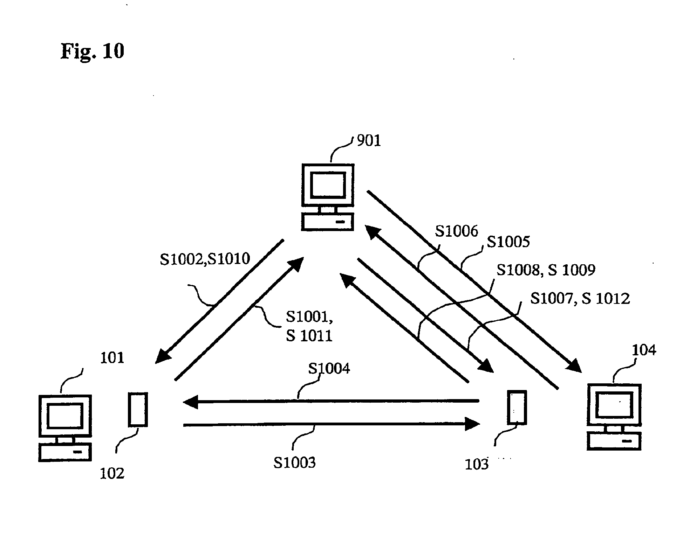

Fig. 10 is a simplified diagram illustrating the processing of the system utilizing the security information apparatus.

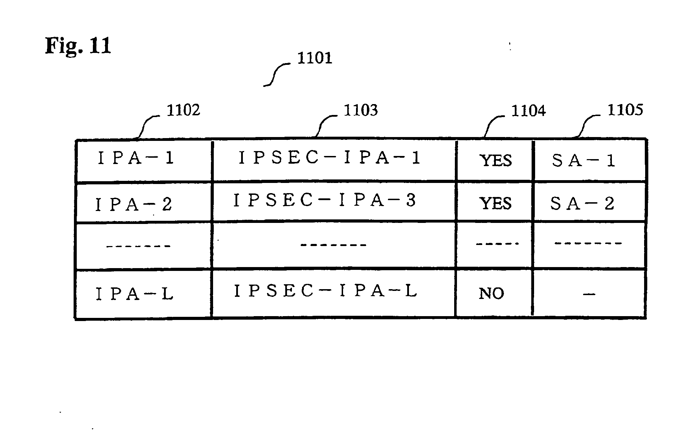

Fig. 11 is an example of a first database of the security information apparatus.

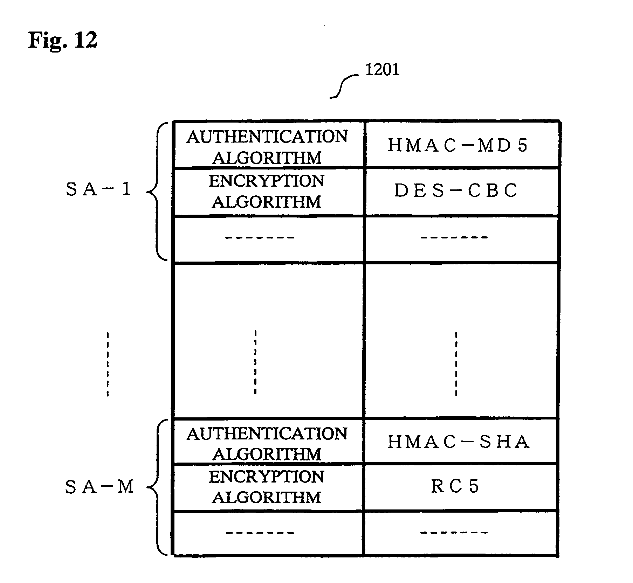

Fig. 12 is an example of a second database of the security information apparatus.

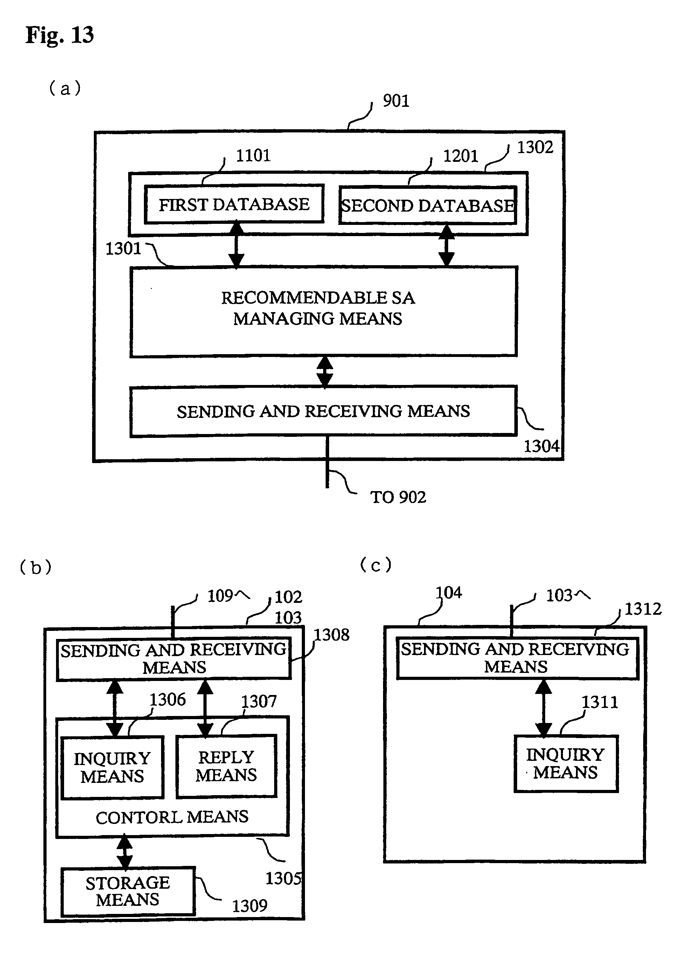

Fig. 13 is a block diagram showing the outline of each apparatus in the third embodiment.
Fig. 14 is a block diagram of a network system making up VPN using a router having the IPSEC function.
Fig. 15 is a diagram showing the connecting procedure of the security communication between the network interface apparatuses having the IPSEC function.
Fig. 16 is a detailed diagram of AH format and ESP header format.
Fig. 17 is an example of SPD (Security Policy Database) as a database that determines the processing policy of the IPSEC in the prior art.
Fig. 18 is an example of SAD (Security Association Database) as a SA database in the prior art.
Fig. 19 is a flowchart showing the IPSEC processing of the network interface apparatus on the sending end in the prior art.
Fig. 20 is a flowchart showing the IPSEC processing of the network interface apparatus on the receiving end in the prior art.
Fig. 21 is a block diagram of the configuration of the network interface apparatus in the prior art.

Here is explained this embodiment regarding differences from the prior arts referring to the drawings, in order to understand the invention. However, the following embodiments do not restrict the technological scope, but are only examples of the concrete.

### [EMBODIMENT 1]

First of all, the explanation is made regarding the outline of the security communication method, the security communication system and the apparatus thereof in the first embodiment referring to Figs.1, 2(a), 2(b), and 4.

Fig.1 is a diagram showing the outline of a system utilizing the security communication method of the invention. In Fig. 1, a computer 101 is connected with the other computer 105 and a network interface apparatus 102 via LAN 107, and further connected with an external Internet 109 or WAN like Intranet through the network interface apparatus 102. The Internet 109 is connected with the other network interface apparatus 103 and LAN 108, and the LAN 108 is connected with computers 104 and 106. Each network interface apparatus 102 and 103 is a firewall or a VPN dedicated apparatus such as a router, a gateway, and a proxy server. The computers 101 and 105 are connected with a user authentication apparatus 110 and 111 respectively. The computer 101 and others can be terminals including the communication function, such as a personal computer, a workstation, a server, a notebook-sized personal computer, an IP phone, an IP TV-phone, and an IP mobile phone.

Assuming that the IPSEC processing is performed on the communication between the network interface apparatuses 102 and 103 like the prior art, here is explained this embodiment. However, the object of the IPSEC processing is not restricted to the communication between the network interface apparatuses 102 and 103, but it may be the communication between the computer 101 on the sending end and the computer 104 of the destination, or the communication between the computer 101 and the network interface apparatus 103, this is the same as the prior art. Fig. 2(a) is a SPD per user that is applied to this embodiment. Fig. 2(b) is an example of SAD per user. The contents of the SPD per user and the SAD per user will be explained in detail later.

According to the block diagram of the configuration of network interface apparatus 102 (103) in Fig.4 (the network interface apparatus 103 has the same configuration), the internal processing of the network interface apparatuses 102 and 103 is explained hereafter.

In the network interface apparatus of this embodiment to carry out determine the security level per user, first the user and the IP address of the destination are inputted, which procedure will be explained later. Accordingly, it can be prospected that the changing such as the adding of user and the update of the configuration is required more than before, even in the conventional network interface apparatus, which is connected with LAN as the dedicated circuit between a head office and a branch. Whenever the configuration is updated, such conventional apparatus must be powered on or reset, thereby the communication should hang up even it's a short time. It is very inconvenient for a user. Therefore, by executing the internal processing of the network interface apparatus as follows, the always-on operation can be carried out without power on or reset of the apparatus.

Then, in Fig. 4, the respective network interface apparatuses 102 and 103 is provided with a processor 401, a temporary data storage 402, a data storage 403, a system controller 404, a network controller 406, and a circuit controller 407, those are connected with each other via internal bus or a switch 405. The processor 401, the temporary data storage 402, and the system controller 404 could function as security type selecting means 408 for the processing described after.

In addition, the SPD per user 201 and the SAD per user 207 are stored respectively in the data storage 403 configured by the non-volatile memory such as a flash memory, a hard disk, and ROM. When the network interface apparatus 102 is switched on, the processor 401 reads the SPD per user 201 and the SAD per user 207 from the data storage 403 passing through the system controller 404, and stores them in the temporary data storage 402 configured by the volatile memory such as DRAM and SDRAM. After that, the processor 401 performs the IPSEC processing according to the SPD per user 201 and the SAD per user 207 stored in the temporary data storage 402. Whenever the configuration is changed, the object of the update is only the SPD per user 201 and the SAD per user 207 stored in the data storage 403. The processing up to now is the same as that of the prior art except the configurations of the SPD per user 201 and the SAD per user 207.

However, since the IPSEC processing in the prior art goes on referring to the SPD and SAD stored in the temporary data storage 402, reading the SPD and the SAD from the data storage 403 again is executed only when the apparatus restarts after the apparatus was powered on or reset. Therefore, when the SPD and SAD was changed, this is after the apparatus is powered on or reset that the updated SA is reflected on the IPSEC processing.

In this embodiment, however, when the SPD and SAD in the data storage 403 are updated according to the configuration change, the following processing is executed. The processor 401, if the communication processing is performed according to the SPD and the SAD stored in the temporary data storage 402, suspends the communication as soon as the communication ends, then reads the updated SPD and SAD from the data storage 403 and writes them over the corresponding SPD and the corresponding SAD stored in the temporary data storage 402. Here are the updated SPD and the updated SAD overwritten by the processor 401, but the other SPD not updated are not overwritten. Thereby, the processing does not affect the IPSEC communication of users using the SPD and the SAD without concerning in the update.

After the SA is reestablished by the IKE phase 2 according to the stored SPD and SAD, the IPSEC processing restarts according to the established new SA.

Since the update processing of SPD and SAD is executed as described above, even when the level of the security communication is changed, there is no need for the restart of the apparatus, and it is possible to confirm immediately that the update is available. In other words, the IKE phase 2 enables to reestablish the SA and reflect the update on the communication.

The method of reestablishing the SA while being in the communication of the IPSEC can be predetermine as follows; as soon as the communication is suspended, the reestablishing is performed; or the reestablishing is performed after the communication ends. In addition, the method may be predetermined according to the type of the packet to be processed.

Next, here is explained the detail of the procedure of registering in the network interface apparatus the definition information group for the SPD per user and the SAD per user shown in Fig.2 before the security communication starts.

First, an administrator of the network interface apparatus 102 inputs into the processor 401 of the network interface apparatus 102 IP address of each destination and whether the IPSEC processing is performed or not at the communication, and these input is made every user who uses the computer 101 and 105, thereby the SPD per user (SPD-1 to SPD-N) is registered. The user authentication method will be described later. In this case, that the IP address of each destination indicates that of the computer 104 and 106, for example, is the same as that of the prior art. And the registration can be performed from WEB browser of the computer 101 and 105, for example, otherwise, from the network interface apparatus 102 directly. Moreover, the range of IP address of each destination can be specified like the prior art.

In case of setting that the IPSEC processing is performed, there is a need to input a series of the definition information group SAD (SAD-1 to SAD-2) per user including the authentication algorithm, the authentication parameter, the encryption algorithm and the encryption parameter, those are the contents of the SA applied to the IPSEC processing. According to the above input, a plurality of the SPD per user 201 shown in Fig. 2(a) are registered in the data storage 403 of the network interface apparatus 102. Additionally, a series of the definition information group including the authentication algorithm, the authentication parameter, the encryption algorithm and the encryption parameter, that are the contents of the SA, is registered as the SAD 207 per user. The SA included in the registered SAD 207 is proposed to the network interface apparatus 103 by the IKE phase 2 which will be described later.

The SPD 201 shown in Fig. 2(a), like the SPD 1701 in the prior art, includes the address of destination 202, whether the IPSEC processing is performed or not 203, and the address pointer 204 indicating the position of the SA. Additionally, when the data is sent to the IP address of destination 202, the SPD 201 includes the IP address of the communication terminal 206 to which the IPSEC packet is sent. The SPD in this embodiment can be distinct from that of the prior art by the user's name 205. Fig. 2(a) shows an example of setting the SPD per user, but it may be arranged to specify the SA per user preparing an item to identify each user in a SPD.

Likewise, the SAD per user 207 shown in Fig. 2(b) has the same configuration as the SAD 1801 of the prior art in Fig. 18, and one of the SAD includes a plural SA. For instance, SAD-1 includes from SA-11 to SA-1M (211), while SAD-N includes from SA-N1 to SA-NM. Each SA includes address information 209, SPI 210 of the index information, and SAP 212 of the security parameter. The address information 209 includes the IP address of destination, the port number of destination, the IP address of sending end, the port number of sending end, the protocol number and so on, and such configuration is the same as the prior art. But the SAD 207 can be distinguished by the user's name 208, which is different from the prior art. Fig. 2(b) shows an example of the registration of the SAD per user, but the SA per user can be managed preparing an item in a SAD to identify each user.

After the above registration ends, the network interface apparatus 102 gets in communication by the IKE phase 1 and phase 2 with the network interface apparatus 103 to confirm that the contents of the registration are available, according to the user's information that will be described later. While confirming whether it is possible to perform the IPSEC communication according to the contents of the registration, if possible, the network interface apparatus 102 establishes the SA. It is not always necessary to establish the SA whenever the registration ends, and establishing the SA may be made when the computers 101 and 104 starts the communication via the network interface apparatuses 102 and 103.

Like the network interface apparatus 102, the user authentication apparatus is connected with the computers 104 and 106, and then each configuration in the network interface apparatus 103 about the IP address of destination may be registered per user who uses the computers 104 and 106.

The method for identifying users using the computer 101 is explained hereinafter.

A user who wants to use the computer 101 puts an IC card storing an inherent number, that can specify the user at his use, into the user authentication apparatus 110, thereby the inherent number is inputted. Next, the user inputs a password corresponding to the inherent number from the user authentication apparatus 110. When the inherent number of the IC card inputted from the user authentication apparatus 110 and the password agrees with predetermined one, the user is authenticated, thereby the computer 101 is available to the user. Additionally, the user's name obtained by the above user authentication is stored in the computer 101.

The user authentication does not always performed by the IC card, but it may be made by an apparatus that can identify a person by using a magnetic card, a one-time password, a finger print, a hand shape, a hand print, a handwriting, a iris, a face shape, a voice print, or DNA. Otherwise, instead of installing the user authentication apparatus, the authentication can be made by inputting the user's name and the password to the computer 101. The storage of the predetermined inherent number and password is not always located at the computer 101, but the computer 101 may be arranged to inquire the inherent number and the password to a computer that is provided separately for storing the inherent number and the password so as to manage them in centralized.

The next description refers to the processing in case that the computer 101 gets in communication with the computer 104 connected via Internet 109, and according to Figs. 1, 2, and 3 it will explained in detail. The security type selecting means 408 shown in Fig.4 executes the following processing.

However, after establishing the SA to be used by the IPSEC communication, the computer 101 adds an IP header to the data to be sent from the computer 101 to the computer 104, and then sends it as an IP packet to the network interface apparatus 102 via LAN 107, those procedure are the same as the prior art. In this embodiment, additionally, the computer 101 performs further processing of inserting the user's name obtained by the user authentication into an optional part of the IP header. The optional part is a data area that a user (a designer) can use arbitrary in the IP header.

After receiving the IP packet sent from the computer 101 on the sending end, the network interface apparatus 102 first reads the user's name and the IP address of destination included in the IP packet (Fig. 3, S301), and then selects the SPD corresponding to the user's name from a plural SPD per user 201, and further searches the IP address of destination 202 from the SPD corresponding to the user's name according to the IP address of destination (Fig.3, S302). In addition, the network interface apparatus 102 confirms whether the corresponding IPSEC processing is performed or not 203.

When "whether the IPSEC processing is performed or not" 203 is "NO", that is to say, if the configuration is that the IPSEC is not performed, the network interface apparatus 102 sends the received IP packet to the network interface apparatus 103 without performing the IPSEC processing (Fig.3, S303: NO).

When "whether the IPSEC processing is performed or not" 203 is "YES", that is to say, if the configuration is that the IPSEC is performed, the network interface apparatus 102 reads the IP address 206 of the communication terminal to which the IPSEC packet is sent and the address pointer 204 indicating the position of SA, along with reading the corresponding SA according to the address pointer 204 (Fig. 3, S304). The SA in the above is established by the IKE phase 2, which is the same as the prior art.

Next, according to the contents of the SA, the network interface apparatus 102 prepares the authenticated/encrypted data from the IP packet by using the specific authentication algorithm or the specific encryption algorithm (Fig.3, S305). In addition, the network interface apparatus 102 adds the authenticated/encrypted data with AH of the authentication header or ESP of the authentication/encryption header, and then change the address of destination to an IP address of communication terminal 206 to which the IPSEC packet is sent, and then sends them to the network interface apparatus 103 via Internet 109 (Fig.3, S306).

The subsequent processing; after the network interface apparatus 103 determines whether the received IP packet is an IPSEC packet or not, the original IP packet is prepared; is the same as the prior art.

As described above, since the SPD is configured in advance per user and the SA indicating the contents of the security communication is determined based on the information of the user authentication, it is possible to determine the level of the security communication suitable to that of the user without spoiling the conventional facilities.

In this embodiment, the network interface apparatus is arranged to have the IPSEC function, but there is no problem even if the computer 101 or 104 includes the IPSEC function and performs the security communication.

Under the conditions that the SA is established, when the SPD corresponding to the user's name is searched, the corresponding SPD cannot be found or the IP address corresponding to the SPD cannot be found (which is not illustrated in the drawing), at this time, the following configuration can be acceptable, that is, the message may be displayed including that meaning and then the IP packet may be sent out without the security processing, otherwise the network interface apparatus may not perform the security communication. In addition, it may be arranged that the network interface apparatus ask a user whether the data transmission is made or not. When the configuration on the SPD is predetermined that the IPSEC processing is not performed, the IP packet is sent to the IP address of destination without performing the IPSEC processing on.

Moreover, the protocol of the security communication in this embodiment is restricted to IPSEC, however, when the network interface apparatus installs a plural protocol of the security communication, associating the user information with the protocol of the security communication enables to make a proper use of the protocol of the security communication per user. Therefore, it is possible to perform various types of security communication.

Meanwhile, it is arranged in this embodiment that the SPD corresponding to each user be specified by the IPSEC. Likewise, in case of the protocol other than the IPSEC, the SA or the information equivalent to SA can be specified by referring to the SPD corresponding to the user authentication information or the database corresponding to the SPD, thereby a series of the definition information group, such as the authentication algorithm and the encryption algorithm, can be specified. It is general that the SA may be specified directly depending on a type of the protocol without referring to the SPD.

It may be arranged in case of a plurality of user that, instead of preparing the SPD per user, each group to which a user belongs be prepared and the level of the security communication be changed per group. In this case, the group information shall be also managed at the user authentication, and referring to the group information may specify the SPD.

Since the embodiment configures that the user's name obtained by the user authentication is inserted in the option part of the IP header, each IP packet can correspond to the user's name. In addition, the following configuration may associate the IP packet with the user's name; when the user authentication is performed, each computer informs a network interface apparatus of the contents of the user authentication, the network interface apparatus stores the database that associates the user's name with the computer respectively.

### [EMBODIMENT 2]

Referring to Figs. 5 and 6, the second embodiment expresses the method associating the address information of the application layer with the SA. The application layer indicates the 7th layer of OSI reference model, and means an application concerning with the communication. The Internet address information of the application layer is assumed to include a host name or a representation of URL (Uniform Resource Locator) combining a host name and the connecting protocol. The network interface apparatus, which will be explained later, is assumed that, even when the level of the security communication is changed, the change can be reflected without restarting the apparatus, like that in the first embodiment.

The SPD 501 using an Internet address in Fig. 5 includes with an Internet address 502, an IP address of destination 503, whether the IPSEC processing is performed or not 504, an address pointer 505 indicating the position of SA. Additionally, in case of sending data to the IP address of destination 503, the SPD 501 further includes an IP address of communication terminal to which the IPSEC packet is sent. The SPD 501 is the same as the SPD 1701 in the prior art except the Internet address 502. The configuration of the SAD including the SA indicated by the address pointer 505 is also the same as the SAD 1801 in the prior art. In addition, the Internet address 502 stores the following addresses, in concrete, URL like "http://abc.def.com", an e-mail address like "abc@def.com", and other address of POP server (Post Office server) or SMTP server (Simple Mail Transfer Protocol server) that are utilized at the sending and receiving of e-mails.

According to Fig. 6, an example of material operation in the second embodiment is explained regarding associating the address information of the application layer with the SA. Fig. 6 is a block diagram of a communication terminal such as a computer determining the configuration of a network interface apparatus having the IPSEC function.

In Fig.6, a communication terminal 608 is provided with control means 609, a display 601, network interface apparatus managing means 610, and input means 611, pointing means 612. The respective software, which will be described later, is executed by the control means 609 or the network interface apparatus managing means 610 composing the control means 609. The representation of the information for user who uses the communication terminal 608 is executed on the display 601 by the display function of respective software.

Fist, a user executes the WEB browser software 602, which is an application software displaying URL 603 of address information of the application layer, by using the control means 609 in the communication terminal 608.

Then, the user executes the network interface apparatus management software 605 by using the network interface apparatus managing means 610. The network interface apparatus management software 605 is provided with a function of displaying a parameter input window 606 and a registration button 607, and the parameter input window 606 displays a plurality of SA supported by the network interface apparatus. The plurality of SA differs from each other in the authentication algorithm and the encryption algorithm, of which difference determines the level of the security communication. The network interface apparatus, being connected directly with the display 601, may include a function of the control means 609 and the network interface apparatus managing means 610, otherwise a computer (the computer 101, for example) that is connected with the network interface apparatus via network may provide a function of the control means 609 and the network interface apparatus managing means 610. In this case, the operation is executed by the computer, and the change of the operation will be reflected on the network interface apparatus by the communication.

A user, who is going to perform the configuration of the network interface apparatus, drags the URL 603 as the address information displayed on the display 601 of the communication terminal 608 by using the pointing means 612, and drops it on a desirable position of the plurality of SA displayed on the parameter input window 606. The pointing means is a device such as a mouse, a trackball, a joystick, a touch pen, and a finger; those are applied to a computer in general. The position on the display 601 indicated by the pointing means 612 is represented as a pointer 604. Therefore, this operation can associate the address information of the application layer with the SA. Subsequently, a user clicks the registration button 607, thereby the registration processing of the network interface apparatus is executed; the registration processing will be described later. However, when clinking the registration button 607, the execution of the configuration and update processing can be selected as either one of the followings: the processing is performed by suspending the communication even though the communication is going on; the processing is performed immediately after the communication ends. In addition, regarding the confirmation of the connection for the security communication, it may confirm the connection with the destination having the updated configuration at starting the communication, or the confirmation of the connection may be performed immediately, which way can be selected.

Next, according to Figs. 4, 5, and 7, the registration processing of the network interface apparatus performed after the end of the user's operation is explained hereafter. First, after the user who is going to configure the network interface apparatus has associated the SA with the address information of the application layer, the processor 401 of the network interface apparatus stores the address information of the application layer in the Internet address 502 of the SPD 501 in the data storage 403 (Fig. 7, S701 to S702)

Next, the processor 401 converts the address information to the IP address by DNS server (Domain Name System server) (Fig.7, S703). The DNS server is generally in common use under the configuration connected with the Internet, and in response to the inquiry concerning the address information, for example, in response to the characters string of "abc.def.com", the server replies the IP address corresponding to "abc.def.com". Then, the processor 401 stores the converted IP address in the IP address of destination 503 on the SPD 501, and further stores in the SAD the IP address of destination, the port number of destination, the IP address of the sending end, the port number of the sending end, and the protocol number respectively; those are necessary for the address information 1804 composing the SAD 1801 stored in the data storage 403 (Fig.7, S704). The port number of both the sending end and destination and the protocol number can be determined by "http" that is a part of the address information, for example.

After preparing the necessary information for the SPD501 and the SAD 1801, the security selecting means 408 of the network interface apparatus asks a user to perform the connection confirmation or not under the configuration (Fig. 7, S705). Besides, instead of inquiring a user whether the connection confirmation is performed or not, it may be arranged to determine separately whether the confirmation of the connection is performed automatically or not. Otherwise, it may be arranged that the confirmation of the connection should be executed when pressing the OK icon or button, those are provided for confirming the connection.

The procedure of confirming the connection with the IP address of destination is performed according to the IKE phase 1, the IKE phase 2, and the information of the SPD 501 and the SAD 1801 that are newly registered, like the prior art, and the result is informed the user (Fig.7, S705: YES to S707). The procedures terminate the processing of associating the address information of the application layer with the SA. After the registration, the security communication is performed according to the registered SPD 501 and SAD 1801.

However, it is not always necessary to enquire a user whether the confirmation of the connection is performed or not, in particular, but it may be executed automatically. And if a security information apparatus (which is described later) is provided between the communication terminals, it is possible to automatically input the IP address of the communication terminal having the IPSEC function.

Since the SA can be registered according to the address information specified by the application that is used in general, even a user without a special knowledge can specify the SA easily.

The parameter input window 606 can display "high security", "middle security", "low security" and "No security", for example, instead of displaying a plurality of SA, thereby it comes to be easy for a user to understand the associating of the address information with the SA.

The second embodiment illustrates the processing for associating the address information with the SA in case of IPSEC; however, it is needless to say that the same processing is performed in case of the protocol other than IPSEC.

In case where the associating processing is performed at the same time of the security communication per user described in the first embodiment, there is no problem. The example of the SPD in this case is shown as the SPD 801 in Fig. 8.

### [EMBODIMENT 3]

Referring to Figs. 9, 10, 11, 12 and 13, here will be explained the function of the security information apparatus in the third embodiment. The respective devices 101 to 111 shown in Fig. 9 are the same as those shown in Fig. 1, in addition to this configuration, a security information apparatus 901 is connected with the Internet 109 via network interface apparatus 902. However, the network interface apparatus 902 does not always need to include the IPSEC function particularly, but may be only an apparatus capable to prevent from the illegal access to the security information apparatus 901 from outside.

The security information apparatus 901 has a configuration shown in Fig. 13(a). That is to say, it is provided with recommendable SA managing means 1301 and storage means 1302. The recommendable SA managing means 1301 is connected with the network interface apparatus 902 via sending and receiving means 1304. The storage means 1302 stores a first database 1101 for searching a recommendable SA shown in Fig. 11 and a second database 1201 for searching a recommendable SA shown in Fig. 12, if necessary, the recommendable SA managing means can read them.

As shown in Fig.13 (b), the network interface apparatuses 102 and 103 are provided with sending and receiving means 1308, storage means 1309 and control means 1305. The control means 1305 is further provided with inquiry means 1306 and reply means 1307.

The computer 104 is provided with sending and receiving means 1312 and reply means 1311 as shown in Fig. 13(c). The function of each means will be described at an opportune moment.

The first database is composed of IP address of destination 1102, IP address of communication terminal 1103 to which the IPSEC packet is sent, whether the IPSEC processing is performed or not 1104, and address pointer 1105 indicating the position of SA. Regarding the IP address of destination 1102 and the IP address of the communication terminal 1103 to which the IPSEC packet is sent, the region of the IP address can be registered. The IP address of the communication terminal 1103 to which the IPSEC packet is sent is that of the communication terminal having the IPSEC function performing the IPSEC processing on the IP address 1102.

Fig. 12 shows the second database 1201 that stores a plurality of recommendable SA. The recommendable SA is one that is recommended by the communication terminal of destination having the IPSEC function or that is regulated by the third party, wherein the level of the security communication differs depending on the services provided by the destination. Fig.10 is a simplified diagram illustrated the communication system omitting unnecessary devices from devices in Fig. 9, in order to explain the third embodiment. According to Fig.9, before establishing the SA with the network interface apparatus 103 that are going to start the IPSEC communication, the network interface apparatuses 102 in the third embodiment inquires the security information apparatus 901 about the recommendable SA to the IPSEC communication. Establishing the SA between the network interface apparatuses 102 and 103 is performed, for example, when a user initializes the network interface apparatuses 102 and 103, when the computers 101 and 104 start the communication via network interface apparatuss 102 and 103, and etc. However, in case where the desirable recommendable SA cannot establish the SA in spite of trying to establish the SA, there are the following considerable ways: suspending the sending; inquiring a user about the reason; performing the IPSEC communication after the SA is established by the SA other than the recommendable one.

When the computers 101 and 104 start the communication via network interface apparatuss 102 and 103, the inquiry of recommendable SA is performed as follows.

The network interface apparatus 102 receives the IP packet to be sent to the computer 104 from the computer 101 via sending and receiving means 1308, and then the control means 1305 read the SPD stored in the storage means 1309 of the network interface apparatus 102.

At this time, if the SPD do not includes the information of the computer 104, the network interface apparatus 102 inquires the security information apparatus 901 about the recommendable SA to the IPSEC communication by using the inquiry means 1306 (Fig. 10, S1001). It is assumed that the address of the security information apparatus 901 is stored in the storage means 1309 of the network interface apparatus 102 in advance.

In the processing of inquiring the recommendable SA, the network interface apparatus 102 sends the IP address of the computer 104 of the destination to the security information apparatus 901. After receiving the IP address of the computer 104 through the sending and receiving means 1304, the recommendable SA managing means 1301 of the security information apparatus 901 reads the IP address of destination 1102 in the first database 1101 stored in the storage means 1302 according to the IP address of the computer 104, and then obtains the IP address of the communication terminal 1103 to which the corresponding IPSEC packet is sent, whether the IPSEC processing is performed or not 1104, and the address pointer 1105 pointing the position of SA.

The recommendable SA managing means 1301 further obtains the recommendable SA from the second database 1201 stored in the storage means 1302 according to the address pointer 1105, and then sends to the network interface apparatus 102 the recommendable SA along with the IP address of the communication terminal 1103 to which the IP SEC packet is sent, and whether the IPSEC processing is performed or not 1104 (Fig.10, S1002).

The IP address of the communication terminal 1103, to which the IPSEC packet is sent, stores the IP address of the network interface apparatus 103 that was registered in advance. It is needless to say that the number of recommendable SA to be sent back may be plural.

Next, after receiving the recommendable SA, the IP address of the communication terminal 1103 to which the received IPSEC packet is sent, and whether the IPSEC processing is performed or not 1104, the control means 1305 of the network interface apparatus 102 establishes the SA with the network interface apparatus 103 as described in the prior art, according to the IP address of the communication terminal 1103 to which the received IPSEC packet is sent, and then proposes the recommendable SA as a candidate SA by the IKE phase 2 (Fig. 10, S1003).

If the received recommendable SA can establish the IPSEC communication, the network interface apparatus 103 returns the recommendable SA to the network interface apparatus 102. Thereby the establishing of the communication is completed (Fig. 10, S1004).

Therefore, since the network interface apparatus 102 inquires the security information apparatus 901 about the recommendable SA, thereby it is possible to obtain the SA that can communicate with an opposite in security, and to perform the IPSEC communication by the recommendable SA.

By the say, it must be considered that, though the network interface apparatus 102 inquires about the recommendable SA to the IPSEC, the first database of the security information apparatus has not registered the corresponding IP address (Fig. 10, S1001).

In this case, the recommendable SA managing means 1301 of the security information apparatus 901 inquires the corresponding computer 104 about the candidate SA necessary for the security communication (Fig.10, S1005).

The computer 104 receiving the inquiry returns to the security information apparatus 901 by using the reply means 1311 the IP address of the network interface apparatus 103 having the IPSEC function which has been registered in the computer 104 in advance (Fig.10, S1006).

The recommendable SA managing means of the security information means 901, which received the IP address of the network interface apparatus 103 having the IPSEC function, then inquire the network interface apparatus 103 about the candidate SA (Fig. 10, S1007). The control means 1305 of the network interface apparatus 103 receiving the inquiry sends the candidate SA stored in the storage means 1309 of the network interface apparatus 103 to the security information apparatus 901 by using the reply means 1307 (Fig. 10, S1008).

The recommendable SA managing means 1301 of the security information apparatus 901 receiving the candidate SA registers the candidate SA in the second database, at the same time registers in the first database 1101 the IP address used for the inquiry of the network interface apparatus 102, the address pointer 1105 indicating the position of the candidate SA, the IP address of the communication terminal 1103 to which the PSEC packet is sent, and whether the IPSEC processing is performed or not 1104. And the recommendable SA is sent back to the network interface apparatus 102 through the sending and receiving means 1304 along with the IP address of the communication terminal 1103 to which the IPSEC packet is sent and whether the IPSEC processing is performed or not 1104 (Fig.10, S1002).

However, when the computer 104 receiving the inquiry has not registers the IP address of the network interface apparatus 103, or when the system isn't provided with a communication terminal having the IPSEC function, or when the system isn't provided with the reply means 1311, the computer 104 sends back the meaning or replies nothing to the security information apparatus 901. The security information apparatus 901 receiving the reply or nothing notifies the network interface apparatus 102 of the meaning, meanwhile registering the IP address of the computer 104 in the IP address of the destination 1102 of the first database 1101 and then changing "whether the IPSEC processing is performed or not" 1104 to "NO". In this case, the control means 1305 of the network interface apparatus 102 may notify a user using the computer 101 that the security communication cannot start, or the communication is not performed.

In case of the bi-directional communication, two of the independent SA is registered by the IKE phase 2 like the prior art. Therefore, when the IKE phase 2 establishes the SA based on the request of the network interface apparatus 102, the control means 1305 of the network interface apparatus 103 may inquire the security information apparatus 901 of the recommendable SA for the network interface apparatus 102 (Fig. 10, S1009)

When the first database 1101 of the security information apparatus 901 has not registered the recommendable SA for the network interface apparatus 102, the recommendable SA managing means 1301 of the security information apparatus 901 inquires the network interface apparatus 102 of the candidate SA (Fig.10, S1010 to S1011). Subsequently, the reply to the inquiry is sent to the network interface apparatus 103 (Fig.10, S1012). Since this sequence is the same as the above steps from S1001 to S1002 and from S1007 to S1008, the explanation is omitted here.

As described above, since the system is provided with a security information apparatus, a user can determine the proper SA without considering the level of the security communication of the destination. In addition, for instance if the third party manages the security information apparatus, it is possible to optimize the level of the security communication per the service contents provided by the destination, or per the address of the destination. Moreover, the security information apparatus can manage the recommendable SA in centralized by automatically inquiring the corresponding communication terminal of the candidate SA and then collecting the contents, thereby each communication terminal having the IPSEC function can obtain candidates of the recommendable SA only by inquiring the security information apparatus. Particularly in case of the large-scale network utilizing the IPSEC communication like that a plural company is connected with each other via router including IPSEC function, this system is easy for a user to configure the communication terminal for the security communication, therefore it is effective to reduce the administrator's or user's responsibility.

The database stored by the security information apparatus in this invention is divided into two parts, but it is not always necessary to divide the database in particular. The security information apparatus may be arranged to have one database if it is possible to carry out the function. In addition, the database can store not only the abovementioned items but also the information necessary for the other SA.

The security information apparatus may be added with the function of the RADIUS server (Remote Authentication Dial-In User server), thereby the security information apparatus can manage the key information exchanged by the IKE, and the SPI information corresponding to the SA all together, and then may provide those information.

In case where each computer includes the IPSEC function, the computer can inquire the security information apparatus like the network interface apparatus.

As the IP address of the destination and the IP address of the communication terminal to which the IPSEC packet are sent, the IP address is used, but it is not restricted to this. The address may be the information that can specify the communication terminal of the destination, for instance, a computer name, a MAC address (Media Access Control Address), a telephone number, and so on.

The third embodiment can be used combining with the first embodiment. In this case, the control means 1305 and the storage means 1309 may become the security type selecting means 408, and the sending and receiving means 1308 may become the network controller 406 and the circuit controller 407.

## Claims

1. A security communication (102, 103) apparatus for assuring the security of a communication sent from a communication terminal (101) on a sending end to a communication terminal (104) on a receiving end connected via a network (109), **characterised in that** the apparatus comprises:
storage means (403) arranged to store associating information (205) and security type selecting means (408) arranged to select the type of security communication protocol (204) from the associating information (205) according to the information;
wherein the associating information (205) stored in the storage means (403) associates information which specifies a user using the communication terminal (101) on the sending end with a type of security communication protocol (204) to be applied to the communication of the user; and
the selecting means (408) being arranged to select the type of security communication protocol (204) from the information which specifies the user, sent from the communication terminal (101) on the sending end, and wherein the apparatus (102, 103) further comprises:
inquiry means (1306) for inquiring at a security information apparatus (901) the type of security communication protocol (1105) to be applied, the security type selecting means (408) being arranged to select the type of security communication protocol according to the reply to the inquiry; and
sending and receiving means.

2. A security communication apparatus (102, 103) according to claim 1, wherein, when the associating information is changed, the security type selecting means (408) is arranged to confirm immediately that the communication is established based on the changed information.

3. A security communication apparatus (102, 103) according to claim 1, wherein the security protocol is IPSEC.

4. A security communication apparatus (102, 103) according to either claim 1 or 2, the type selected by the security type selecting means (408) is a group of definition information used for the security communication.

5. A security communication apparatus (102, 103) according to claiin 4, wherein the group of definition information is a security policy.

6. A security communication apparatus (102, 103) according to claim 4, wherein the group of definition information includes at least one of an authentication algorithm and an encryption algorithm.

7. A security communication apparatus (102, 103) according to claim 1, wherein the storage means (403) is arranged to store associating information (205) that associates Internet address information (202) inputted into an application (605) working in the communication terminal (101) on the sending end, instead of the information which specifies the user, with the type of security communication protocol (204); and,
security type selecting means (408) arranged to select the type of security communication protocol (204) from the associating information (205) according to the Internet address information (202).

8. A security communication apparatus (102, 103) according to either claim 7 wherein security type selecting means is arranged to select the type of security communication protocol (204) by visually associating the visualized Internet address information (603) with the visualized list of security type (606).

9. A security communication apparatus (102, 103) according to claim 7, wherein the security type selecting means is arranged to convert the Internet address information (202) to an IP address by utilizing the domain name system server.

10. A security communication apparatus (102, 103) according to any one of claims 7 to 9, wherein the type of security communication protocol (204) is a security protocol.

11. A security communication apparatus (102, 103) according to claim 10, wherein the security protocol is IPSEC.

12. A security communication apparatus (102, 103) according to any one of claims 7 to 9, wherein the type of security communication protocol is a group of definition information used for the security communication.

13. A security communication apparatus (102, 103) according to claim 12, wherein the group of definition information is a security policy.

14. A security communication apparatus (102, 103) according to claim 12, wherein the group of definition information includes at least one of an authentication algorithm and an encryption algorithm.

15. A security communication system for assuring the security of the communication sent from a communication terminal (101) on a sending end to a communication terminal (104) on a receiving end connected via a network (109), the system comprising:
user authentication means (110) for authenticating a user using the communication terminal on the sending end **characterised in that** the system further comprises:
a security communication apparatus (102, 103) having:
storage means (403) arranged to store first associating information (205) that associates information which specifies a user using the communication terminal (101) on the sending end with a type of security communication protocol (204);
security type selecting means (408) arranged to select the type of security communication protocol (204) from the associating information according to the information which specifies the user authenticated by the user authentication means;
a security information apparatus (901) having:
storage means (1302) arranged to store second associating information (110) that associates terminal specifying information (1102) specifying a destination communication terminal (104) with a recommendable type of security communication protocol (1105) to be applied to a communication with the destination communication terminal (104); and recommendable security type managing means (1301) arranged to select the recommendable type of security communication protocol (1105) from the associating information (1101) according to the terminal specifying information (1102) in response to an inquiry for the recommendable type of security communication protocol (1105) from a security communication apparatus (102); and sending means for sending the selected recommendable security type.

16. A security communication system according to claim 15, wherein, when the first associating information (205) is changed, the security type selecting means (408) is arranged to confirm immediately that the communication is established based on the changed information.

17. A security communication method using a security communication apparatus (102) for assuring the security of a communication between communication terminals (101, 104), those terminals being connected to each other via a network (109), the method comprising the step of:
selecting the type of security communication protocol (204) that should be applied to the communication of a user according to information which specifies a user using the communication terminal (101); and wherein
the security communication apparatus (102) inquires from a specific security information apparatus (901) for the recommendable type of security communication protocol (1105) for another specific communication terminal (104);
the specific security information apparatus (901) selects the recommendable type of security communication protocol (1105) in response to the inquiry from the communication apparatus (102), and then sends it to the communication apparatus (102);
the security communication apparatus (102) determines the security type according to the recommendable security type sent from the security information apparatus (901).

## Patentansprüche

1. Vorrichtung der gesicherten Kommunikation (102, 103) zur Gewährleistung der Sicherheit einer von einem Kommunikationsendgerät (101) an einem sendenden Ende zu einem Kommunikationsendgerät (104) an einem empfangenden Ende über ein Netzwerk (109) gesendeten Kommunikation,
**dadurch gekennzeichnet,**
**dass** die Vorrichtung folgendes umfasst:
ein Speichermittel (403), das so ausgelegt ist, dass es Assoziierungsinformationen (205) speichert, und ein Sicherheitstypauswahlmittel (408), das so ausgelegt ist, dass es aus den Assoziierungsinformationen (205) gemäß den Informationen den Typ des gesicherten Kommunikationsprotokolls (204) auswählt;
wobei die in dem Speichermittel (403) gespeicherten Assoziierungsinformationen (205) Informationen, die einen das Kommunikationsendgerät (101) am sendenden Ende benutzenden Benutzer spezifizieren, mit einem Typ des auf die Kommunikation des Benutzers anzuwendenden gesicherten Kommunikationsprotokolls (204) assoziieren; und
das Auswahlmittel (408) so ausgelegt ist, dass es den Typ des gesicherten Kommunikationsprotokolls (204) aus den Informationen auswählt, die den Benutzer spezifizieren, die von dem Kommunikationsendgerät (101) am sendenden Ende gesendet wurden, und wobei die Vorrichtung (102, 103) ferner folgendes umfasst:
ein Abfragemittel (1306) zum Abfragen des Typs des anzuwendenden gesicherten Kommunikationsprotokolls (1105) bei einer Sicherheits-Informationsvorrichtung (901), wobei das Sicherheitstypauswahlmittel (408) so ausgelegt ist, dass es den Typ des gesicherten Kommunikationsprotokolls gemäß der Antwort auf die Abfrage auswählt; und
Sende- und Empfangsmittel.

2. Vorrichtung der gesicherten Kommunikation (102, 103) nach Anspruch 1, wobei das Sicherheitstypauswahlmittel (408) so ausgelegt ist, dass es, wenn die Assoziierungsinformationen geändert werden, sofort bestätigt, dass die Kommunikation auf der Basis der geänderten Informationen hergestellt ist.

3. Vorrichtung der gesicherten Kommunikation (102, 103) nach Anspruch 1, wobei das gesicherte Protokoll IPSEC ist.

4. Vorrichtung der gesicherten Kommunikation (102, 103) nach Anspruch 1 oder 2, wobei der von dem Sicherheitstypauswahlmittel (408) ausgewählte Typ eine Gruppe von für die gesicherte Kommunikation verwendeten Definitionsinformationen ist.

5. Vorrichtung der gesicherten Kommunikation (102, 103) nach Anspruch 4, wobei die Gruppe von Definitionsinformationen eine Sicherheitsrichtlinie ist.

6. Vorrichtung der gesicherten Kommunikation (102, 103) nach Anspruch 4, wobei die Gruppe von Definitionsinformationen einen Authentifikationsalgorithmus und/oder einen Verschlüsselungsalgorithmus enthält.

7. Vorrichtung der gesicherten Kommunikation (102, 103) nach Anspruch 1, wobei das Speichermittel (403) so ausgelegt ist, dass es Assoziierungsinformationen (205) speichert, die statt der Information, die den Benutzer spezifizieren, in eine in dem Kommunikationsendgerät (101) am sendenden Ende arbeitende Anwendung (605) eingegebene Internetadresseninformationen (202) mit dem Typ des gesicherten Kommunikationsprotokolls (204) assoziieren; und
wobei das Sicherheitstypauswahlmittel (408) so ausgelegt ist, dass es den Typ des gesicherten Kommunikationsprotokolls (204) gemäß den Internetadresseninformationen (202) auswählt.

8. Vorrichtung der gesicherten Kommunikation (102, 103) nach Anspruch 7, wobei das Sicherheitstypauswahlmittel (408) so ausgelegt ist, dass es den Typ des gesicherten Kommunikationsprotokolls (204) durch visuelles Assoziieren der visualisierten Internetadresseninformationen (603) mit der visualisierten Liste des Sicherheitstyps (606) auswählt.

9. Vorrichtung der gesicherten Kommunikation (102, 103) nach Anspruch 7, wobei das Sicherheitstypauswahlmittel (408) so ausgelegt ist, dass es die Internetadresseninformationen (202) durch Verwendung des Domänennamensystem-Servers in eine IP-Adresse umsetzt.

10. Vorrichtung der gesicherten Kommunikation (102, 103) nach einem der Ansprüche 7 bis 9, wobei der Typ des gesicherten Kommunikationsprotokolls (204) ein Sicherheitsprotokoll ist.

11. Vorrichtung der gesicherten Kommunikation (102, 103) nach Anspruch 10, wobei das gesicherte Protokoll IPSEC ist.

12. Vorrichtung der gesicherten Kommunikation (102, 103) nach einem der Ansprüche 7 bis 9, wobei der Typ des gesicherten Kommunikationsprotokolls eine Gruppe von für die gesicherte Kommunikation verwendeten Definitionsinformationen ist.

13. Vorrichtung der gesicherten Kommunikation (102, 103) nach Anspruch 12, wobei die Gruppe von Definitionsinformationen eine Sicherheitsrichtlinie ist.

14. Vorrichtung der gesicherten Kommunikation (102, 103) nach Anspruch 12, wobei die Gruppe von Definitionsinformationen einen Authentifikationsalgorithmus und/oder einen Verschlüsselungsalgorithmus enthält.

15. System der gesicherten Kommunikation zur Gewährleistung der Sicherheit der von einem Kommunikationsendgerät (101) an einem sendenden Ende zu einem Kommunikationsendgerät (104) an einem empfangenden Ende über ein Netzwerk (109) gesendeten Kommunikation, wobei das System folgendes umfasst:
ein Benutzerauthentifikationsmittel (110) zum Authentifizieren eines das Kommunikationsendgerät an dem sendenden Ende benutzenden Benutzers,
**dadurch gekennzeichnet,**
**dass** das System ferner folgendes umfasst:
eine Vorrichtung der gesicherten Kommunikation (102, 103), die folgendes aufweist:
ein Speichermittel (403), das so ausgelegt ist, dass es erste Assoziierungsinformationen (205) speichert, die Informationen, die einen das Kommunikationsendgerät (101) am sendenden Ende benutzenden Benutzer spezifizieren, mit einem Typ des gesicherten Kommunikationsprotokolls (204) assoziieren;
ein Sicherheitstypauswahlmittel (408), das so ausgelegt ist, dass es den Typ des gesicherten Kommunikationsprotokolls (204) aus den Assoziierungsinformationen gemäß den Informationen, die den durch das Benutzerauthentifikationsmittel authentifizierten Benutzer spezifizieren, auswählt;
eine Sicherheits-Informationsvorrichtung (901), die folgendes aufweist:
ein Speichermittel (1302), das so ausgelegt ist, dass es zweite Assoziierungsinformationen (110) speichert, die Endgerätespezifizierungsinformationen (1102), die ein Zielkommunikationsendgerät (104) spezifizieren, mit einem auf eine Kommunikation mit dem Zielkommunikationsendgerät (104) anzuwendenden empfehlenswerten Typ von gesichertem Kommunikationsprotokoll (1105) assoziieren; und ein Verwaltungsmittel für den empfehlenswerten Sicherheitstyp (1301), das so ausgelegt ist, dass es den empfehlenswerten Typ von gesichertem Kommunikationsprotokoll (1105) aus den Assoziierungsinformationen (1101) gemäß den Endgerätespezifizierungsinformationen (1102) als Reaktion auf eine Abfrage nach dem empfehlenswerten Typ von gesichertem Kommunikationsprotokoll (1105) von einer Vorrichtung der gesicherten Kommunikation (102) auswählt; und ein Sendemittel zum Senden des gewählten empfehlenswerten Sicherheitstyps.

16. System der gesicherten Kommunikation nach Anspruch 15, wobei das Sicherheitstypauswahlmittel (408) so ausgelegt ist, dass es, wenn die ersten Assoziierungsinformationen (205) geändert werden, sofort bestätigt, dass die Kommunikation auf der Basis der geänderten Informationen hergestellt ist.

17. Verfahren der gesicherten Kommunikation unter Verwendung einer Vorrichtung der gesicherten Kommunikation (102) zur Gewährleistung der Sicherheit einer Kommunikation zwischen Kommunikationsendgeräten (101, 104), wobei diese Endgeräte über ein Netzwerk (109) miteinander verbunden sind, wobei das Verfahren die folgenden Schritte umfasst:
Auswählen des Typs des gesicherten Kommunikationsprotokolls (204), der auf die Kommunikation eines Benutzers angewandt werden soll, gemäß Informationen, die einen das Kommunikationsendgerät (101) am sendenden Ende benutzenden Benutzer spezifizieren; und wobei
die Vorrichtung der gesicherten Kommunikation (102) aus einer spezifischen Sicherheits-Informationsvorrichtung (901) nach dem empfehlenswerten Typ von gesichertem Kommunikationsprotokoll (1105) für ein anderes spezifisches Kommunikationsendgerät (104) abfragt;
die spezifische Sicherheits-Informationsvorrichtung (901) den empfehlenswerten Typ von gesichertem Kommunikationsprotokoll (1105) als Reaktion auf die Abfrage aus der Kommunikationsvorrichtung (102) auswählt und ihn dann zu der Kommunikationsvorrichtung (102) sendet;
wobei die Vorrichtung der gesicherten Kommunikation (102) den Sicherheitstyp gemäß dem aus der Sicherheits-Informationsvorrichtung (901) gesendeten empfehlenswerten Sicherheitstyp bestimmt.

## Revendications

1. Appareil de communication de sécurité (102, 103) pour assurer la sécurité d'une communication envoyée à partir d'un terminal de communication (101) à une extrémité d'émission jusqu'à un terminal de communication (104) à une extrémité de réception raccordé via un réseau (109), **caractérisé en ce que** l'appareil comprend :
un moyen de stockage (403) disposé pour stocker des informations d'association (205) et un moyen de sélection de type de sécurité (408) disposé pour sélectionner le type de protocole de communication de sécurité (204) à partir des informations d'association (205) selon les informations ;
dans lequel les informations d'association (205) stockées dans le moyen de stockage (403) associent des informations qui spécifient un utilisateur utilisant le terminal de communication (101) à l'extrémité d'émission avec un type de protocole de communication de sécurité (204) à appliquer à la communication de l'utilisateur ; et
le moyen de sélection (408) étant disposé pour sélectionner le type de protocole de communication de sécurité (204) à partir des informations que spécifie l'utilisateur, envoyées par le terminal de communication (101) à l'extrémité d'émission, et dans lequel l'appareil (102, 103) comprend en outre :
un moyen d'interrogation (1306) pour interroger à l'appareil d'informations de sécurité (901) le type de protocole de communication de sécurité (1105) à appliquer, le moyen de sélection de type de sécurité (408) étant disposé pour sélectionner le type de protocole de communication de sécurité selon la réponse à l'interrogation ; et
un moyen d'émission et de réception.

2. Appareil de communication de sécurité (102, 103) selon la revendication 1, dans lequel, lorsque les informations d'association sont changées, le moyen de sélection de type de sécurité (408) est disposé pour confirmer immédiatement que la communication est établie sur la base des informations changées.

3. Appareil de communication de sécurité (102, 103) selon la revendication 1, dans lequel, le protocole de sécurité est IPSEC.

4. Appareil de communication de sécurité (102, 103) selon l'une ou l'autre de la revendication 1 ou 2, dans lequel, le type sélectionné par le moyen de sélection de type de sécurité (408) est un groupe d'informations de définition utilisé pour la communication de sécurité.

5. Appareil de communication de sécurité (102, 103) selon la revendication 4, dans lequel, le groupe d'informations de définition est une politique de sécurité.

6. Appareil de communication de sécurité (102, 103) selon la revendication 4, dans lequel, le groupe d'informations de définition comprend au moins un d'un algorithme d'authentification et d'un algorithme de cryptage.

7. Appareil de communication de sécurité (102, 103) selon la revendication 1, dans lequel, le moyen de stockage (403) est disposé pour stocker les informations d'association (205) qui associent des informations d'adresse Internet 202) introduites dans une application (605) fonctionnant dans le terminal de communication (101) à l'extrémité d'émission, au lieu des informations que spécifie l'utilisateur, avec le type de protocole de communication de sécurité (204) ; et,
un moyen de sélection de type de sécurité (408) disposé pour sélectionner le type de protocole de communication de sécurité (204) à partir des informations d'association (205) selon les informations d'adresse Internet (202).

8. Appareil de communication de sécurité (102, 103) selon la revendication 7, dans lequel le moyen de sélection de type de sécurité est disposé pour sélectionner le type de protocole de communication de sécurité (204) en associant visuellement les informations d'adresse Internet visualisées (603) avec la liste visualisée du type de sécurité (606).

9. Appareil de communication de sécurité (102, 103) selon la revendication 7, dans lequel le moyen de sélection de type de sécurité est disposé pour convertir les informations d'adresse d'Internet (202) en une adresse IP en utilisant le serveur de système de nom de domaine.

10. Appareil de communication de sécurité (102, 103) selon l'une quelconque des revendications 7 à 9, dans lequel le type de protocole de communication de sécurité (204) est un protocole de sécurité.

11. Appareil de communication de sécurité'(102, 103) selon la revendication 10, dans lequel le protocole de sécurité est IPSEC.

12. Appareil de communication de sécurité (102, 103) selon l'une quelconque des revendications 7 à 9, dans lequel le type de protocole de communication est un groupe d'informations de définition utilisé pour la communication de sécurité.

13. Appareil de communication de sécurité (102, 103) selon la revendication 12, dans lequel le groupe d'informations de définition est une politique de sécurité.

14. Appareil de communication de sécurité (102, 103) selon la revendication 12, dans lequel le groupe d'informations de définition comprend au moins un d'un algorithme d'authentification et d'un algorithme de cryptage.

15. Système de communication de sécurité pour assurer la sécurité de la communication envoyée par un terminal de communication (101) à une extrémité d'émission jusqu'à un terminal de communication (104) à une extrémité de réception raccordée via un réseau (109), le système comprenant :
un moyen d'authentification d'utilisateur (110) pour authentifier un utilisateur utilisant le terminal de communication à l'extrémité d'émission **caractérisé en ce que** le système comprend en outre :
un appareil de communication de sécurité (102, 103) ayant :
un moyen de stockage (403) disposé pour stocker des premières informations d'association (205) qui associent des informations que spécifie un utilisateur utilisant le terminal de communication (101) à l'extrémité d'émission avec un type de protocole de communication de sécurité (204) ;
un moyen de sélection de type de sécurité (408) disposé pour sélectionner le type de protocole de communication de sécurité (204) à partir des informations d'association selon les informations que spécifie l'utilisateur authentifié par le moyen d'authentification d'utilisateur ;
un appareil d'informations de sécurité (901) ayant :
un moyen de stockage (1302) disposé pour stocker des secondes informations (110) qui associent des informations de spécification de terminal (1102) spécifiant un terminal de communication de destination (104) avec un type recommandable de protocole de communication de sécurité (1105) à appliquer à une communication avec le terminal de communication de destination (104) ; et un moyen de gestion de type recommandable de sécurité (1301) disposé pour sélectionner le type recommandable de protocole de communication de sécurité (1105) à partir des informations d'association (1101) selon les informations de spécification de terminal (1102) en réponse à une demande pour le type recommandable de protocole de communication de sécurité (1105) à partir de l'appareil de communication de sécurité (102) ; et un moyen d'émission pour envoyer le type de sécurité recommandable sélectionné.

16. Système de communication de sécurité selon la revendication 15, dans lequel, lorsque les premières informations d'association (205) sont changées, le moyen de sélection de type de sécurité (408) est disposé pour confirmer immédiatement que la communication est établie sur la base des informations changées.

17. Procédé de communication de sécurité utilisant un appareil de communication de sécurité (102) pour assurer la sécurité d'une communication entre des terminaux de communication (101, 104), ces terminaux étant raccordés l'un à l'autre via un réseau (109), le procédé comprenant les étapes de :
sélection du type de protocole de communication de sécurité (204) qui devrait être appliqué à la communication d'un utilisateur selon les informations que spécifie un utilisateur utilisant le terminal de communication (101) ; et dans lequel
l'appareil de communication de sécurité (102) interroge l'appareil d'informations de sécurité spécifique (901) pour le type recommandable de protocole de communication de sécurité (1105) pour un autre terminal de communication spécifique (104) ;
l'appareil d'informations de sécurité spécifique (901) sélectionne le type recommandable de protocole de communication de sécurité (1105) en réponse à la demande de l'appareil de communication (102) ; et l'envoie à l'appareil de communication (102) ;
l'appareil de communication de sécurité (102) détermine le type de sécurité selon le type de sécurité recommandable envoyé par l'appareil d'informations de sécurité (901).
